# EUROPÄISCHE PATENTSCHRIFT

(11) **EP 3 230 730 B1**
(45) Veröffentlichungstag und Bekanntmachung des Hinweises auf die Patenterteilung: **04.12.2019**
(21) Anmeldenummer: 15816692.6
(22) Anmeldetag: 10.12.2015
(51) Int. Cl.: G01N 30/60

(54) **SPRITZENGEHÄUSE ZUM PIPETTIEREN EINES BIOLOGISCHEN MATERIALS MIT INTEGRIERTEN MEMBRANEN**
SYRINGE HOUSING FOR PIPETTING A BIOLOGICAL MATERIAL, COMPRISING INTEGRATED MEMBRANES
BOÎTIER DE SERINGUE À MEMBRANES INTÉGRÉES POUR LE PIPETAGE D'UNE MATIÈRE BIOLOGIQUE

(30) Priorität: 10.12.2014 DE 202014105965 U
(43) Veröffentlichungstag der Anmeldung: 18.10.2017
(73) Patentinhaber: Cell.Copedia GmbH, 04109 Leipzig (DE)
(72) Erfinder: HERBERT, Stadler, 37127 Niemetal (DE); GERDES, Wilhelm, 04109 Leipzig (DE); PRZIBILLA, Sabine, 04109 Leipzig (DE)
(74) Vertreter: Schiweck Weinzierl Koch Patentanwälte Partnerschaft mbB
(86) Internationale Anmeldenummer: PCT/EP2015/079279
(87) Internationale Veröffentlichungsnummer: WO 2016/092025

(56) Entgegenhaltungen:
- EP-A2- 0 476 997
- DE-A1-102008 050 750
- US-A- 3 902 849
- US-A- 5 336 412
- Anonymous: "Cell.Copedia", , 29. August 2014 (2014-08-29), Seiten 1-2, XP055253276, Gefunden im Internet: URL:http://www.cellcopedia.com/news.html [gefunden am 2016-02-25]

## Beschreibung

Spritzen sind heutzutage weit verbreitet und sind unter anderem aus dem medizinischen Sektor wie auch aus dem biotechnologischen Bereich kaum wegzudenken. Spritzen können wie eine Kartusche oder Säule beispielsweise zur affinitätschromatographischen Reinigung von biologischen Materialen wie Zellen, Viruspartikel oder Liposomen verwendet werden. Solche Verfahren zur affinitätschromatographischen Reinigung von biologischen Materialien sind z.B. in der Internationalen Patentanmeldung WO 2013/124474 und den darin genannten Publikationen beschrieben. Für solche Reinigungsverfahren können die Spritzen zweigeteilt sein. Dabei sind nahe der Ein-/Austrittsöffnung zwei Membranen vorgesehen, die dazwischen einen Bereich definieren, in dem ein funktionalisiertes Matrixmaterial vorliegen kann, welches zur selektiven Abtrennung von biologischen Materialien wie Proteine, Zellen oder anderen biologischen Einheiten wie Liposomen oder Viruspartikeln dient. Bei dem funktionalisierten Matrixmaterial kann es sich beispielweise um Polymer-Kügelchen (Beads) wie Agarose-Kügelchen oder Glaskügelchen handeln. Die Oberfläche des Matrixmaterials (zum Beispiel ein Agarose- oder Glaskügelchen) ist üblicherweise mit einem speziellen Bindungsreagenz beschichtet. Das Bindungsreagenz kann z.B. ein Antikörpermolekül sein, das ein Oberflächenmolekül des biologischen Materials spezifisch bindet, beispielsweise ein Antikörper oder Antikörperfragment gegen einen Oberflächenrezeptor, der sich auf der Oberfläche einer bestimmten Zellpopulation befindet (vgl. hierzu WO 2013/124474). Wird eine Flüssigkeitsprobe, die ein bestimmtes zu isolierendes biologische Material enthält, in die Spritze eingeführt, so bindet das biologische Material (z.B. Zellen des Immunsystems wie T-Zellen) an das Matrixmaterial, mit dem die Spritze befüllt ist und auf dem z.B. geeignete Antikörpermoleküle immobilisiert sind und kann mittels Affinitätschromatographie aus der Flüssigkeit selektiv gereinigt/isoliert werden. Eine solche für die Reinigung eines biologischen Materials ausgelegte Spritze kann auch als Säule zur Affinitätschromatographie bezeichnet.

Solche durchweg aus Kunststoff hergestellten, meist zylinderförmigen Spritzen sollen einerseits beim Saug- und Druck-Hub eines darin verschiebbar gelagerten Kolbens eine möglichst hohe, im Optimalfall absolute Dichtheit zwischen dem Gummipfropfen des Kolbens und der Zylinderinnenfläche gewährleisten. Anderseits ist ein möglichst kraftarmer und langsamer Flüssigkeitstransport wünschenswert.

DE 10 2008 050750 A1, US 3 902 849 A und EP 0 476 997 A2 offenbaren jeweils ein Spritzengehäuse zum Pipettieren eines biologischen Materials.

Bei bekannten Spritzen sind deren Spitzen meist dünn ausgeführt, so dass der Kolben zur Beförderung von Fluiden in das oder aus dem Spritzeninneren nur mit einem gewissen Kraftaufwand bewegt werden kann. Zudem verursacht je nach Geschwindigkeit, mit welcher der Kolben im Spritzeninneren bewegt wird, die dünn ausgeführte Injektionsspritze einen turbulenten Flüssigkeitsstrom, welcher bei biochemischen Zellreinigungsvorgängen unerwünscht sein kann. Üblicherweise sind bekannte Spritzen auch recht dünn ausgeführt, so dass ihre Fassungsvolumina für viele Anwendungen zu gering sind.

Aufgabe der Erfindung ist es, eine Vorrichtung bereitzustellen, welche die oben dargestellten Probleme löst, also beispielsweise eine Spritze, die eine turbulenzfreie Flüssigkeitsströmung im Inneren sowie beim Ein-/Austritt aus gewährleisten kann sowie ein kraftarmes Verschieben des Kolbens ermöglicht.

Diese Aufgabe wird von der vorliegenden Erfindung gelöst, insbesondere wird die Aufgabe durch die nachstehenden Aspekte der vorliegenden Erfindung, wie Vorrichtungen, Verfahren oder Verwendungen und Ausführungsformen davon sowie durch die Gegenstände der Ansprüche gelöst. Die Abbildungen illustrieren die vorliegende Erfindung. Es wird ebenfalls eine Vorrichtung bereitgestellt, in welcher Agarose leicht eingefüllt und "eingesperrt" werden kann.

In einem ersten Aspekt betrifft die Erfindung ein Spritzengehäuse zum Pipettieren eines biologischen Materials, wobei das Spritzengehäuse folgende Elemente aufweist:
- einen Spritzenkörper, welcher ein erstes offenes Ende und ein zweites offenes Ende aufweist, wobei zwischen diesen beiden offenen Enden ein erster Kanal ausgebildet ist;
- eine erste Membran, welche sich senkrecht zur Längsrichtung des ersten Kanals über dessen Querschnitt erstreckend angeordnet ist;
- einen Spritzenkörperaufsatz, welcher ein erstes offenes Ende und ein zweites offenes Ende aufweist, wobei zwischen diesen beiden offenen Enden ein zweiter Kanal ausgebildet ist;
- eine zweite Membran, welche sich senkrecht zur Längsrichtung des zweiten Kanals über dessen Querschnitt erstreckend angeordnet ist;
- wobei das zweite offene Ende des Spritzenkörpers und das erste offene Ende des Spritzenkörperaufsatzes derart ausgebildet sind, dass sie formschlüssig zusammensteckbar sind und so das Spritzengehäuse ausbilden
- wobei der erste Kanal und der zweite Kanal im zusammengesteckten Zustand des Spritzengehäuses einen durchgehenden Kanal ausbilden; und
- wobei die erste Membran und die zweite Membran im Bereich des durchgehenden Kanals ein Extraktionsvolumen definieren;
- wobei das Extraktionsvolumen einen durchgehend gleichbleibenden Durchmesser aufweist und dieser Durchmesser dem Durchmesser des durchgehenden Kanals entspricht.

Der erste Kanal und der zweite Kanal bilden im zusammengesteckten Zustand des Spritzengehäuses einen durchgehenden Kanal und die erste Membran und die zweite Membran definieren im Bereich des durchgehenden Kanals ein Extraktionsvolumen. Nachfolgend wird das erfindungsgemäße Spritzengehäuse zum Pipettieren eines biologischen Materials abgekürzt als Spritzengehäuse bezeichnet werden.

Im Rahmen dieser Beschreibung kann unter einem Spritzengehäuse eine meist, aber nicht notwendigerweise, zylindrische Säule verstanden werden, welche an jedem ihrer Enden eine Öffnung aufweist und in die üblicherweise verschiedene flüssige Substanzen wie Probenlösungen (z.B. Vollblut, Serum oder Plasma), Pufferlösungen, oder biologische Materialien wie z.B. Zellen in wässriger Phase eingebracht werden können oder bereits eingebracht sind. Bei Vorhandensein von Membranen im Inneren des Spritzengehäuses, zwischen welchen ein Matrixmaterial angeordnet ist, oder in anderen Worten, wenn das Spritzengehäuse einen mit einem Matrixmaterial befüllten Extraktionsbereich aufweist, kann eine derart konfigurierte Spritze als Säule zur chromatographischen Reinigung für verschiedene biotechnologische und/oder chemische Verfahren genutzt werden, etwa Protein- oder Zellreinigungen von Material aus unterschiedlichen Quellen. In diesem Zusammenhang kann in den verschiedenen Ausführungsbeispielen des Spritzengehäuses jedes biologischen Material eingesetzt werden, dass eine chromatographischen Reinigung wie z.B. einer Affinitätschromatographie, aber beispielsweise auch einer Gel-Permeations-Chromatographie (auch als Größenausschluss-Chromatographie bezeichnet) unterworfen werden kann. Beispiele für biologische Materialien sind alle die in der Internationalen Patentanmeldung WO 2013/124474 beschriebenen Materialien wie Zellen, Viruspartikel, Liposomen, oder Organellen wie Mitochondrien oder Chloroplasten. Beispiele von Zellen schließen prokaryotische und eukaryotischen Zellen ein. Beispiele für prokaryotische Zellen sind bakterielle Zellen wie E. coli oder Bacillus subtilis, Beispiele für eukaryotische Zellen sind Hefezellen, Insektenzellen und Säugerzellen einschließlich menschlicher Zellen. Säugerzellen können z.B. Zellen des Immunsystems wie Lymphozyten (z.B. T-Zellen, B-Zellen, natürliche Killerzellen), Stammzellen oder bestimmte Körperzellen wie Pankreas- oder Leberzellen sein. Alle diese Zellen tragen spezifische Oberflächenmoleküle, mittels deren diese die Zellen durch affinitätschromatograpischen Reinigung aus einer Probe isoliert werden können. In einer bevorzugten Ausführungsform dient das erfindungsgemäße Spritzengehäuse als "Selektionskartusche" wie in Internationalen Patentanmeldung WO 2013/124474 beschrieben (vgl. dort z.B. Beispiel 1). Eine bevorzugte Anwendung dieser Ausführungsform des Spritzengehäuses und des dazugehörigen Pipettiervorrichtung der vorliegenden Erfindung ist die Reinigung von Zellen des Immunsystems wie z.B. B-Zellen oder T-Zellen im präparativen Maßstab. Das Spritzengehäuse und die Pipettiervorrichtung der vorliegenden Erfindung ermöglicht somit z.B. eine einfache, schnelle und kostengünstige Reinigung von Körperzellen für medizinische oder biochemische Forschungszwecke.

Zur Ausbildung einer Spritze kann das erfindungsgemäße Spritzengehäuse mit einem entsprechenden Kolben bestückt werden, welcher manuell oder automatisiert innerhalb der Spritze bewegt werden kann. Im Folgenden soll unter einer erfindungsgemäßen Spritze das erfindungsgemäße Spritzengehäuse gemeint sein, in das ein Kolben eingesetzt ist. Am hinteren Ende des Spritzengehäuses, d.h. an dem Ende, an dem der Kolben in die Spritze eingesetzt werden kann, kann einen Fingerrand angebracht sein. Der Fingerrand kann zum Fixieren oder Arretieren des Spritzengehäuses verwendet werden. Im Zusammenspiel mit einem Daumenteil eines in dem Spritzengehäuse eingesetzten Kolbens kann der Fingerrand die Verschiebung eines in dem Spritzengehäuse eingesetzten Kolbens erleichtern - automatisiert mittels einer entsprechenden Vorrichtung oder manuell.

Bei den Membranen kann es sich um Fritten handeln, deren Porenweite an die jeweilige Anwendung angepasst werden kann. Die Membranen könne eine solche Porenweite aufweisen, dass die in einer Anwendung zum Einsatz kommenden flüssigen Medien und Pufferlösungen sowie das zu reinigende biologische Material ungehindert hindurchtreten können, die Membranen jedoch das sich zwischen ihnen befindende Matrixmaterial sicher und zuverlässig zurückbehalten können. Mit anderen Worten kann die Porenweite der Membranen derart gewählt werden, dass sie kleiner ist als der kleinste Durchmesser oder die kleinste Abmessung der Partikel des Matrixmaterials, jedoch größer ist als die größte Abmessung der Partikel oder Moleküle in den verwendeten wässrigen Phasen. Typischerweise kann die Porenweite jeden beliebigen Wert im Bereich von einigen wenigen Mikrometern, also etwa ungefähr 1µm, 2µm, oder 3µm bis einigen Hundert Mikrometern einnehmen, beispielweise 100µm, 200µm, 500µm.

Sowohl die erste Membran wie auch die zweite Membran erstrecken sich über den gesamten Querschnitt des im Inneren des Spritzengehäuses gebildeten Kanals und sind senkrecht zu seiner Längsrichtung angeordnet, wobei dieser Kanal von dem ersten Kanal und dem zweiten Kanal im zusammengesetzten Zustand des Spritzengehäuses gebildet wird. Anders ausgedrückt kann der erste Kanal stufenlos in den zweiten Kanal übergehen. Im Teilbereich des Kanals zwischen den beiden Membranen, nachfolgend als Extraktionsbereich oder Extraktionsvolumen bezeichnet, kann das Matrixmaterial vorliegen. Durch gezielte Anordnung der ersten Membran innerhalb des ersten Kanals und der zweiten Membran innerhalb des zweiten Kanals kann zum einen das Volumen des Extraktionsbereiches frei eingestellt werden, zum anderen kann auch seine relative Lage innerhalb des Kanals festgelegt werden.

Im zusammengesetzten Zustand des Spritzengehäuses bilden der Spritzenkörper und der Spritzenkörperaufsatz eine formschlüssige Einheit und der erste Kanal fluchtet mit dem zweiten Kanal, ohne dass am Übergang eine Veränderung des Kanaldurchmessers erfolgt. Anders ausgedrückt geht im zusammengesetzten Zustand des Spritzengehäuses der erste Kanal stetig in den zweiten Kanal über. Zwischen dem Spritzenkörper und dem Spritzenkörperaufsatz kann optional eine Dichtung vorgesehen sein, jedoch ist sie nicht erforderlich, da durch die formschlüssige Zusammensetzung des Spritzenkörpers und des Spritzenkörperaufsatzes ein nach außen hin dichtes Spritzengehäuse gebildet wird. Gemäß verschiedenen Ausführungsbeispielen können die Komponenten des Spritzengehäuses, also der Spritzenkörper, der Spritzenkörperaufsatz und die beiden Membranen aus geeigneten Kunststoffen ausgebildet sein. Die Komponenten können jedoch auch beispielsweise aus Glas oder metallischen Stoffen gefertigt sein, wenn dieses für eine bestimme Anwendung als vorteilhaft angesehen werden sollte, etwa wenn stark ätzende Medien zum Einsatz kommen.

Die erste Membran und die zweite Membran definieren im Bereich des durchgehenden Kanals das Extraktionsvolumen. Das Extraktionsvolumen kann vor Zusammensetzen des Spritzengehäuses mit einem Matrixmaterial befüllt werden. Die beiden Membranen können hinsichtlich ihrer Porenweite so gewählt werden, dass die Flüssigkeitsströmung durch das Extraktionsvolumen hindurch erfolgen kann, jedoch das Matrixmaterial nicht durch die Membranen hindurchtreten kann. In diesem Zusammenhang kann als Beispiel eine Porengröße von 50 µm genannt werden, welche genügend groß ist, um beispielsweise alle bei der Zellreinigung vorkommenden Stoffe durchzulassen, hingegen das Matrixmaterial, welches beispielsweise in Form von Kügelchen (engl.: beads) vorliegen kann, welche einen Durchmesser im Bereich von 50 µm aufweisen können effektiv im Extraktionsvolumen zurückzuhalten. Das Extraktionsvolumen kann an die jeweilige Anwendung angepasst werden und hängt letzten Endes sowohl vom Durchmesser des Kanals sowie vom Abstand, in dem die beiden Membranen zueinander platziert sind. Bei Spritzengehäusen mit einem Kanaldurchmesser von etwa 5 mm kann das Extraktionsvolumen ein Volumen von etwa 200 µl aufweisen und bei solchen mit einem Kanaldurchmesser von etwa 1 cm kann das Extraktionsvolumen ein Volumen von 1 ml bis etwa 2 ml aufweisen. Es ist zu betonen, dass die genannten Zahlen einzig zur Veranschaulichung möglicher Größenordnung dienen und nicht als technisch bedingte Limitierungen anzusehen sind.

In weiteren Ausführungsbeispielen der erfindungsgemäßen Vorrichtung kann die erste Membran integral mit der Innenwand des Spritzenkörpers ausgebildet sein. Beispielsweise kann die erste Membran stoffschlüssig an der Innenwand des Spritzenkörpers oder stoffschlüssig mit ihrem Rand in der Innenwand des Spritzenkörpers befestigt sein, indem sie bereits beim Spritzgießvorgang des Spritzenkörpers in diesen eingebracht wird. Dadurch kann die erste Membran integral mit dem Spritzenkörper ausgebildet sein. Unter diesem Aspekt kann hinzugefügt werden, dass keine zusätzlichen Halteelemente, wie etwa Halteringe oder Trageringe, erforderlich sind, um die erste Membran im Spritzenkörper an einer gewünschten Position im ersten Kanal zu fixieren. Solche Halteelemente können sich generell störend auf die Fluidmechanik innerhalb des ersten Kanals bzw. des vom Spritzenkörper gebildeten Kanals auswirken, da sie den Kanal abrupt und/oder stufenartig verengen und sich zudem Partikel im Kontaktbereich zwischen solchen Halteelemente und der Innenwand des Kanals verfangen können. Beides sind Effekte, welche in der Laboranalytik unerwünscht sind. Bei dem hier beschriebenen Spritzengehäuse können durch die direkte Verankerung/Befestigung der ersten Membran in bzw. an der Innenwand des ersten Kanals solche Effekte vermieden werden. Anstatt beim Spritzgießen kann die erste Membran in den Spritzenkörper eingebracht werden, indem dieser an der gewünschten Stelle entlang einer Ebene senkrecht zu seiner Längsausrichtung aufgetrennt wird, die erste Membran zwischen die beiden voneinander getrennten Teile gelegt wird und anschließend diese beiden Spritzenkörperteile wieder zusammengeführt werden. Die beiden Spritzenkörperteile können beispielsweise thermisch oder unter Verwendung eines geeigneten Klebemittels zusammengefügt werden. Aus Sicht einer den ersten Kanal bzw. den Kanal durchströmenden Flüssigkeit stellt die erste Membran eine singuläre Störung in der ansonsten durchgehend glatten Innenwand des ersten Kanals bzw. des Kanals dar, wobei die axiale Ausdehnung dieser singulären Störung in der Größenordnung der Dicke der ersten Membran liegt und damit im Bereich von etwa 30 µm bis etwa 150 µm liegen kann, wobei je nach Anwendung und Material der Membran ihre Dicke auch größer oder kleiner ausfallen kann. Die in diesem Absatz getroffenen Aussagen können in Weise hinsichtlich der Befestigung der zweiten Membran an bzw. in der Innenwand des Spritzenkörperaufsatzes gelten.

In weiteren Ausführungsbeispielen der erfindungsgemäßen Vorrichtung kann der Durchmesser des ersten Kanals im Bereich oberhalb der ersten Membran im Wesentlichen dem Durchmesser des ersten Kanals im Bereich unterhalb der ersten Membran entsprechen. Diese Eigenschaft kann auf die integrale Befestigung der ersten Membran an bzw. in der Innenwand des ersten Kanals zurückgeführt werden, zu welcher keinerlei zusätzliche Haltemittel erforderlich sind. Insgesamt kann der erste Kanal einen durchgehend gleichbleibenden Durchmesser aufweisen, also nicht verjüngt sein. Die in diesem Absatz getroffenen Aussagen können in analoger Weise auf den Durchmesser des zweiten Kanals im Bereich oberhalb und unterhalb der zweiten Membran übertragen werden. Der Durchmesser des ersten Kanals und des zweiten Kanals kann nach je nach Bedarf zwischen einigen Millimetern bis zu einem Zentimeter und darüber hinaus betragen. In der Praxis kann der Durchmesser letztlich einer Normung unterworfen sein. Beispielsweise kann der Durchmesser des Kanals (und damit des ersten Kanals und des zweiten Kanals) bei kleinen Spritzenkörpern im Bereich von etwa 3 mm bis etwa 5 mm liegen. Bei großen Spritzenkörpern kann der Durchmesser des Kanals beispielsweite etwa 1 cm betragen. Die Wandung des Spritzenkörpers kann aus einem Kunststoff gefertigt sein und eine Dicke im Bereich von etwa 0,3 mm bis etwa 3 mm aufweisen.

In weiteren Ausführungsbeispielen der erfindungsgemäßen Vorrichtung kann der Übergang innerhalb des ersten Kanals von einem Bereich oberhalb der ersten Membran zu einem Bereich unterhalb der ersten Membran stufenlos sein. Hierbei sind die relativen Ausdrücke "oberhalb" und "unterhalb" nicht als einschränkend zu sehen, sondern je nach Lage des Spritzengehäuses als "hinter" und "vor" oder "links" und "rechts" (oder umgekehrt) zu lesen. Die in diesem Absatz getroffenen Aussagen können in gleicher Weise für den Übergang innerhalb des zweiten Kanals in Bezug auf die zweite Membran gelten.

In weiteren Ausführungsbeispielen der erfindungsgemäßen Vorrichtung kann die erste Membran am Ende des ersten Kanals befestigt sein. Dabei erste Membran kann mit einer Seite am unteren Rand des Spritzenkörpers aufgeklebt oder anderweitig befestigt sein. Beim Zusammensetzen des Spritzengehäuses kann dann auf die andere unverklebte Seite der ersten Membran ein Druck von einer entsprechend für den formschlüssigen Zusammenschluss ausgebildete Fläche des Randes des Spritzenkörperaufsatzes ausgeübt werden. Mit anderen Worten kann so der ersten Membran zusätzlicher Halt gegeben werden, indem sie zwischen dem Spritzenkörper und dem Spritzenkörperaufsatz geklemmt wird.

In weiteren Ausführungsbeispielen der erfindungsgemäßen Vorrichtung kann die zweite Membran am zweiten offenen Ende des Spritzenkörpers befestigt sein.

Das Extraktionsvolumen weist einen im Wesentlichen durchgehend gleichbleibenden Durchmesser auf, wobei sein Durchmesser im Wesentlichen dem Durchmesser des durchgehenden Kanals entspricht.

In weiteren Ausführungsbeispielen der erfindungsgemäßen Vorrichtung können das zweite offene Ende des Spritzenkörpers und das erste offene Ende des Spritzenkörperaufsatzes derart ausgebildet sind, dass sie einen Einwegverschluss bilden. Mit anderen Worten können die einander zwecks Ausbildung einer formschlüssigen Einheit (d.h. des Spritzengehäuses) entsprechenden Enden des Spritzenkörpers und des Spritzenkörperaufsatzes im zusammengesetzten Zustand einen nicht wieder lösbaren Verschluss bilden. Unter einem Einwegverschluss oder einem nicht wieder lösbaren Verschluss ist im Rahmen dieser Anmeldung ein Verschluss oder eine Zusammenfügung von Bauteilen gemeint, bei dem sich die Bauteile nicht ohne eine dauerhafte Zerstörung der Verschlussstruktur voneinander lösen lassen. Bei Verwendung eines solchen Einwegverschlusses können der Spritzenkörper und der Spritzenkörperaufsatz nicht wieder gelöst werden und erneut wieder zusammengesetzt werden. In diesem Sinne kann unter einem Einwegverschluss ein Einmalverschluss verstanden werden.

In weiteren Ausführungsbeispielen der erfindungsgemäßen Vorrichtung kann der Einwegverschluss Arretierungsstrukturen aufweisen, welche eingerichtet sind im zusammengesetzten Zustand des Spritzengehäuses ein Loslösen des Spritzenkörpers vom Spritzenkörperaufsatz zu verhindern. Der Einwegverschluss kann mittels Verschlussstrukturen oder Arretierungsstrukturen realisiert werden, welche beim Zusammensetzen des Spritzengehäuses miteinander in Eingriff kommen, beispielsweise einrasten, und dann nicht wieder voneinander lösbar sind, d.h. ohne eine bauteilmäßige Zerstörung in Kauf zu nehmen. So kann beispielsweise beim formschlüssigen Zusammensetzen der Enden des Spritzenkörpers und des Spritzenkörperaufsatzes mindestens eine gezackte Struktur in eine daran geometrisch angepasste Öffnung hineingleiten und einrasten und aus dieser Stellung nicht wieder lösbar sein.

In weiteren Ausführungsbeispielen der erfindungsgemäßen Vorrichtung kann es sich bei dem Einwegverschluss um einen Steckverschluss oder einen Drehverschluss handeln. Ferner kann der Einwegverschluss auch eine gemischte Form aufweisen, also einen Steckverschluss mit einem Drehverschluss kombinieren. mit einem Steckverschluss kann ein Verschluss gemeint sein, bei dem die Steckerpartner überwiegend aufeinander gesteckt, geschoben, gesetzt werden. Unter einem Drehverschluss kann ein Verschluss gemeint sein, bei dem die Steckerpartner überwiegend gegeneinander rotiert werden. Bei dem Einwegverschluss kann es sich aber auch um eine Mischform aus dem Steck- und Drehverschluss handeln.

In weiteren Ausführungsbeispielen der erfindungsgemäßen Vorrichtung können das zweite offene Ende des Spritzenkörpers und das erste offene Ende des Spritzenkörperaufsatzes derart ausgebildet sein, dass eines der offenen Enden einen daraus axial herausragenden Kragen aufweist, welcher im zusammengesetzten Zustand des Spritzengehäuses mit einem nach innen stufig ausgebildeten Bereich des entsprechend anderen offenen Endes im Eingriff steht.

In weiteren Ausführungsbeispielen der erfindungsgemäßen Vorrichtung kann diese ferner einen Kolben aufweisen, welcher im Inneren des Spritzengehäuses axial verschiebbar gelagert ist. Mittels des Kolbens kann im Kanal innerhalb des Spritzengehäuses ein Unter- oder Überdruck erzeugt werden, wodurch wässrige Medien aus dem Kanal verdrängt oder in den Kanal eingesaugt werden können.

In weiteren Ausführungsbeispielen kann die erfindungsgemäße Vorrichtung einen Kolbenstopper aufweisen, welcher eingerichtet ist die Eintauchtiefe des Kolbens in das Spritzengehäuse zu begrenzen. Der Kolbenstopper kann sowohl im Spritzengehäuse oder aber auch am Kolben selbst ausgebildet sein. Im ersten Fall kann der Kolbenstopper als eine Verdickung ausgebildet sein, beispielsweise eine an der Innenwand des Kanals nach innen gerichtete Wölbung oder ein entsprechender Vorsprung, wobei diese oder dieser vollumfänglich oder nur entlang eines Teils des Umfangs des Kanals ausgebildet sein kann. In diesem ersten Fall dient der Kolbenstopper einer Verengung des Querschnitts des Kanals, so dass der Gummipfropfen des Kolbens an diesem nicht vorbeigeschoben werden kann und so eine maximale Eintauchtiefe des Kolbens in das Spritzengehäuse festgelegt werden kann. Im gegensätzlichen Falle, dass der Kolbenstopper am Kolben selbst ausgebildet ist, kann dieser beispielsweise als eine Verdickung oder ein Vorsprung an der Kolbenstange eingerichtet sein, welche oder welcher den Durchmesser des Kolbens derart gestaltet (z.B. vergrößert), dass er nicht weiter in das Spritzengehäuse eingeschoben werden kann.

In weiteren Ausführungsbeispielen der erfindungsgemäßen Vorrichtung kann der durchgehende Kanal, d.h. der vom ersten Kanal und vom zweiten Kanal gebildete Kanal, einen im Wesentlichen konstanten Durchmesser aufweisen. Hierbei sollen kleinräumige Durchmesserverengungen, etwa den an der Innenwand des durchgehenden Kanals ausgebildeten Kolbenstopper, außer Acht bleiben. Beispielsweise kann der Durchmesser am ersten offenen Ende des Spritzenkörpers dem Durchmesser am zweiten offenen Ende des Spritzenkörpers entsprechen, so dass der durchgehende Kanal dem Inneren eines durchgehenden Hohlzylinders entspricht. Dabei kann es vorteilhaft sein, wenn das zweite offene Ende des Spritzenkörperaufsatzes (unteres Ende des Spritzengehäuses), welches sozusagen den Ausgang bzw. Eingang darstellt, als eine Breite Öffnung eingerichtet ist und zwischen diesem und dem ersten offenen Ende des Spritzenkörpers (oberes Ende des Spritzengehäuses) keine Verjüngung oder Durchmesserveränderung des durchgehenden Kanals erfolgt. Mit einem auf diese Weise eingerichteten Spritzengehäuse kann im Betrieb der Vorrichtung ein kontinuierlicher und turbulenzarmer Flüssigkeitsstrom erreicht werden.

Ein weiterer Aspekt dieser Offenbarung betrifft eine beispielhafte Pipettiervorrichtung, welche die Vorzüge des erfindungsgemäßen Spritzengehäuses optimal auszunutzen kann. Die beispielhafte Pipettiervorrichtung kann eine erste Haltevorrichtung, welche eingerichtet ist ein erfindungsgemäßes Spritzengehäuse aufzunehmen und in einer im Wesentlichen vertikalen Lage zu halten, und eine zweite Haltevorrichtung aufweisen, welche eingerichtet ist, einen in dem Spritzengehäuse eingesetzten Kolben zu halten und darin axial zu bewegen, wobei die erste Haltevorrichtung und die zweite Haltevorrichtung relativ zur Pipettiervorrichtung bewegbar sind. Unter axialer Bewegung des Kolbens innerhalb des Spritzengehäuses ist eine Bewegung des Kolbens innerhalb des Spritzengehäuses gemeint entlang einer Achse, welche die Längsausdehnung des Spritzengehäuses beschreibt.

Die Aufgabe der ersten Haltevorrichtung kann darin gesehen werden, das Spritzengehäuse zu halten und zu bewegen. Mittels der ersten Haltevorrichtung kann die Position der Extraktionssäule (d.h. eines mit einem Matrixmaterial befüllten Spritzengehäuses), insbesondere des zweiten offenen Endes des Spritzenkörperaufsatzes eingestellt werden. Damit kann beispielsweise das zur Aufnahme und Abgabe einer Flüssigkeit eingerichtete zweite Ende der Extraktionssäule an eine Probenoberfläche gebracht werden. Durch die flexible höhenmäßige Verstellung der Extraktionssäule können unterschiedliche Proben bzw. unterschiedliche Probenarten mit unterschiedlichen Gefäßgrößen verwendet werden.

Die Aufgabe der zweiten Haltevorrichtung kann darin gesehen werden, einen in die Extraktionssäule eingesetzten Kolben zu halten und diesen innerhalb der Extraktionssäule in Abhängigkeit davon axial zu verschieben, ob eine wässrige Phase in die oder aus der Extraktionssäule befördert werden soll. Der Kolben kann beispielsweise an seinem einen, beispielsweise dem vorderen, Ende einen Pfropfen aufweisen, dessen Querschnitt dem Querschnitt des durchgehenden Kanals der Extraktionssäule entspricht, und an seinem anderen, beispielsweise dem hinteren Ende, ein Halteteil aufweisen, welches im manuellen Betrieb der Spritze dem Daumenteil entspricht. Der Pfropfen, welcher beispielsweise Gummi aufweisen kann, kann mittels einer Kolbenstange mit dem Halteteil mechanisch gekoppelt sein. Der Kolben kann mit dem Halteteil beispielsweise in einen in der zweiten Haltevorrichtung vorgesehenen Einschub eingeführt werden und so an bzw. in der zweiten Haltevorrichtung befestigt werden.

Um ein Spritzengehäuse mitsamt dem Kolben vertikal zu verschieben, d.h. den Abstand zwischen dem Auslauf des Spritzengehäuses und einer darunter befindlichen Probe zu verändern, ohne dass eine Flüssigkeit in die oder aus der Spritze befördert wird, können die erste Haltevorrichtung und die zweite Haltevorrichtung synchron bewegt werden, also ohne eine Relativbewegung zwischen der ersten Haltevorrichtung und der zweiten Haltevorrichtung. Soll hingegen eine Flüssigkeit in die oder aus der Extraktionssäule befördert werden, so ist eine Relativbewegung zwischen der ersten Haltevorrichtung und der zweiten Haltevorrichtung erforderlich. Zur Bereitstellung dieser Funktionalität kann ein erster Motor vorgesehen sein, welcher eingerichtet ist bei Bedarf eine Relativbewegung zwischen dem Gehäuse der Pipettiervorrichtung und der ersten Haltevorrichtung herbeizuführen. Es kann ferner ein zweiter elektrischer Motor vorgesehen sein, welcher eingerichtet ist bei Bedarf eine Relativbewegung zwischen der ersten Haltevorrichtung und der zweiten Haltevorrichtung herbeizuführen. Die Pipettiervorrichtung kann ein erstes Paar Schienen aufweisen, entlang welchen die erste Haltevorrichtung gegenüber der Pipettiervorrichtung mittels des ersten Motors in einer Dimension, beispielsweise vertikal, verschoben werden kann (erste Relativbewegung). Die Pipettiervorrichtung kann ein zweites Paar Schienen aufweisen, entlang welchen die zweite Haltevorrichtung gegenüber der ersten Haltevorrichtung mittels des zweiten Motors in einer Dimension, beispielsweise vertikal, verschoben werden kann (zweite Relativbewegung). Statt Schienen können andere Führungsmittel verwendet werden wie etwa Gewindestangen. Die Ache der ersten Relativbewegung kann parallel sein zur Ache der zweiten Relativbewegung.

In weiteren Ausführungsbeispielen der beispielhaften Pipettiervorrichtung kann diese einen ersten Sensor aufweisen, welcher eingerichtet ist den Abstand zwischen der ersten Haltevorrichtung und der zweiten Haltevorrichtung zu bestimmen. Der erste Sensor kann beispielsweise als ein akustischer, optoelektronischer oder als ein mechanischer Distanzsensor eingerichtet sein, im letzteren Falle etwa als ein druckempfindlicher Distanzsensor mit Druckknopf. Der Sensor kann jedoch beispielsweise auch mittels eines Schrittzählers implementiert sein und damit in dem ersten Motor integriert sein oder ein Teil davon sein.

In weiteren Ausführungsbeispielen der beispielhaften Pipettiervorrichtung kann diese einen zweiten Sensor aufweisen, welcher eingerichtet ist den Abstand zwischen einem Referenzpunkt der Pipettiervorrichtung und der ersten Haltevorrichtung oder der zweiten Haltevorrichtung zu bestimmen. Die hinsichtlich des ersten Sensors getroffenen Aussagen gelten in analoger Weise hinsichtlich des zweiten Sensors. Aus diesem Abstand kann dann über die relative Position der ersten Haltevorrichtung zur zweiten Haltevorrichtung auch die Position der zweiten Haltevorrichtung oder entsprechend der ersten Haltevorrichtung relativ zum Referenzpunkt bestimmt werden. Bei dem Referenzpunkt kann es sich um einen beliebigen ortsfesten Punkt am Gehäuse der Pipettiervorrichtung handeln.

In weiteren Ausführungsbeispielen der beispielhaftenPipettiervorrichtung kann die erste Haltevorrichtung als bewegliche Basis für die zweite Haltevorrichtung eingerichtet sein. Anders ausgedrückt kann die Pipettiervorrichtung derart aufgebaut sein, dass bei einem aktiven Bewegen (d.h. gewolltes und zielgerichtetes Bewegen, z.B. mittels eines Elektromotors) der ersten Haltevorrichtung die zweite Haltevorrichtung passiv mitbewegt wird, da ihr Lager an der ersten Haltevorrichtung angeordnet ist.

In weiteren Ausführungsbeispielen der beispielhaften Pipettiervorrichtung kann diese einen Drehteller aufweisen, welcher unterhalb der ersten Haltvorrichtung angeordnet ist und zur Aufnahme von Proben eingerichtet ist, wobei der Drehteller mittels eines Motors in Rotation versetzbar ist. Bei den Proben kann es sich um Probengefäße mit unterschiedlichen Flüssigkeiten bzw. wässrigen Medien handeln, die z.B. zur säulenchromatographischen Reinigung benötigt werden (z.B. Waschpuffer zum Kalibrieren des Matrixmaterials, die Probe, die die zu reinigenden Zellen enthält, Waschpuffer zum Entfernen von unspezifisch an der Matrix gebundenen Bestandteilen der Probe, Elutionspuffer zum Ablösen der gewünschten Zellen vom Matrixmaterial etc.). Durch gezielte Wahl der Anzahl der Proben und deren Inhalt können unterschiedliche Verfahrenssequenzen durchgeführt werden, bei denen das Innere der Spritze bzw. einer Reinigungssäule, insbesondere das Matrixmaterial samt daran anhaftender Affinitätsreagenz wie Antikörpern, verschiedenen wässrigen Lösungen ausgesetzt werden kann. In einer Verfahrenssequenz können unterschiedlich große Proben verwendet werden, da bei jedem Umschalten auf die nächste Probe, welche dann unterhalb der Spritze positioniert wird, gleichzeitig die Höhe, in der die Spritze gehalten wird, angepasst werden kann. Die Durchführung solcher säulenchromatographischer Reinigungsprotokolle ist dem Fachmann bekannt.

In weiteren Ausführungsbeispielen kann der Drehteller bei der Pipettiervorrichtung durch eine Einrichtung ersetzt werden, welche darauf angeordnete Proben entlang einer Achse oder entlang zwei Achsen bewegt und so eine Probenauswahl ermöglicht. Hierbei können die Proben auf einer beispielsweise rechteckigen Fläche, etwa einem entsprechend eingerichteten Probenhalter, in Reihe(n) hintereinander angeordnet sein. Die Auswahl einer Probe kann erfolgen, in dem der Probenhalter entlang Achse oder entlang von zwei Achsen (gleichzeitig oder hintereinander) verfahren wird, um die gewünschte Probe unterhalb der Spritze zu positionieren. Eine solche Einrichtung kann sich beispielsweise dann anbieten, wenn mehrere Spritzen parallel nebeneinander in einer Aufreinigung zum Einsatz kommen sollen. In diesem Zusammenhang kann angemerkt werden, dass die Pipettiervorrichtung gemäß verschiedenen Ausführungsbeispielen dahingehend abgewandelt werden kann, dass die erste Haltevorrichtung und die zweite Haltevorrichtung eingerichtet sind zwei oder mehr Pipettiervorrichtungen zu halten und simultan zu verwenden.

### Beispiele und Abbildungen

Nachfolgend wird die erfinderische Vorrichtung anhand von beispielhaften Ausführungsbeispielen erläutert. Die Ausführungsbeispiele dienen nur der Veranschaulichung der erfindungsgemäßen Vorrichtung und sollen nicht in irgendeiner Weise als den Schutzbereich eingrenzend verstanden werden.

Es zeigen:
**Figur 1** einen schematischen Aufbau eines beispielhaften Spritzengehäuses in einer Seitenansicht;
**Figur 2** einen beispielhaften Spritzenkörper in einer Seiten- und Draufsicht;
**Figur 3** einen beispielhaften Spritzenkörperaufsatz in einer Seitenansicht;
**Figur 4** einen beispielhaften Kolben in einer 3D-Ansicht;
**Figur 5** eine 3D-Seitenansicht einer beispielhaften Pipettiervorrichtung;
**Figur 6** eine weitere 3D-Seitenansicht einer beispielhaften Pipettiervorrichtung;
**Figuren 7A** und **7B** 3D-Draufsichten auf eine beispielhafte Pipettiervorrichtung vor und nach Einsetzen des erfindungsgemäßen Spritzengehäuses samt darin eingesetztem Kolben;
**Figur 8** eine 3D-Seitenansicht einer beispielhaften Pipettiervorrichtung mit eingesetzter erfindungsgemäßer Spritze;
**Figur 9** ein Flussidagramm zur Veranschaulichung einer beispielhaften Teilsequenz innerhalb eines Pipettiervorgangs (Reinigungsschritts) eines biologischen Materials, welcher mittels der beispielhaften Pipettiervorrichtung ausgeführt werden kann.

### Beschreibung konkreter Ausführungsbeispiele der Erfindung

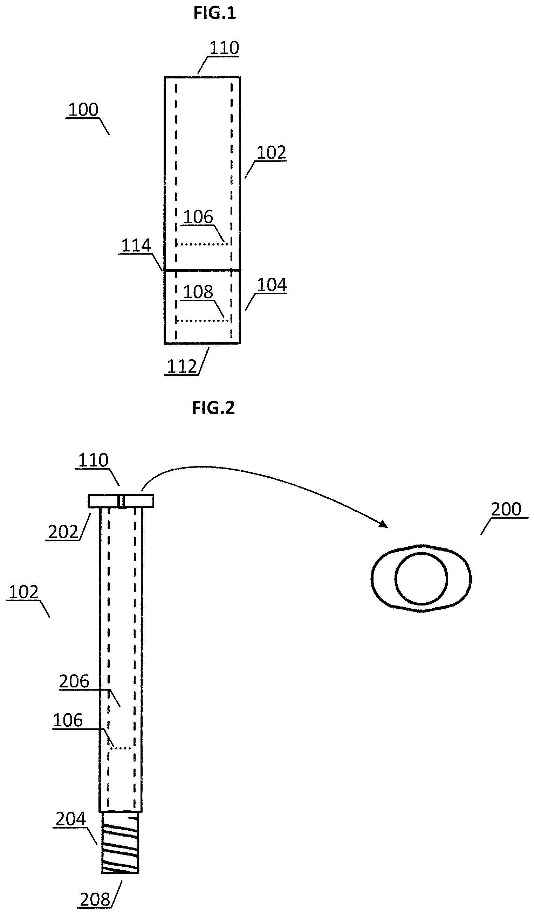

In **Figur 1** ist ein schematischer Aufbau einer Ausführungsform des Spritzengehäuses 100 dargestellt. Dabei ist hier das Spritzengehäuse 100 in einer Seitenansicht dargestellt. Das beispielhafte Spritzengehäuse 100 weist einen Spritzenkörper 102, welcher ein erstes offenes Ende 110 und ein zweites offenes Ende aufweist, wobei zwischen diesen ein erster Kanal ausgebildet ist. Der Spritzenkörper 102 weist eine erste Membran 106 auf, welche sich über den Querschnitt des ersten Kanals erstreckt. Das beispielhafte Spritzengehäuse 100 weist ferner einen Spritzenkörperaufsatz 104 auf, welcher ein erstes offenes Ende und ein zweites offenes Ende 112 aufweist, wobei zwischen diesen ein zweiter Kanal ausgebildet ist. Eine zweite Membran 108 erstreckt sich über den Querschnitt des zweiten Kanals. Beide Membranen 106, 108 sind senkrecht zur Längsrichtung des ersten und des zweiten Kanals angeordnet. Das zweite offene Ende 112 des Spritzenkörpers 110 und das erste offene Ende 110 des Spritzenkörperaufsatzes 104 sind dabei derart ausgebildet, dass sie formschlüssig zusammensteckbar sind und so das Spritzengehäuse 100 ausbilden. Das zweite offene Ende 112 des Spritzenkörperaufsatzes stellt den Auslauf des Spritzengehäuses 100 dar, durch welchen wässrige Medien/Proben in das Spritzengehäuse 100 und umgekehrt eingebracht werden können.

Wie aus der Figur 1 ersichtlich, bilden der Spritzenkörper 102 und der Spritzenkörperaufsatz 104 im zusammengesteckten Zustand das Spritzengehäuse 100. In Figur 1 ist eine Fügestelle 114 eingezeichnet, welche die Grenzfläche zwischen der Außenwand des Spritzenkörpers 102 und der Außenwand des Spritzenkörperaufsatzes 104 andeuten soll. Die Grenzfläche zwischen der Innenwand des Spritzenkörpers 102 und die des Spritzenkörperaufsatzes 104 kann auf einem anderen Niveau liegen, was anhand der weiteren Figuren im Folgenden erklärt wird. An dieser Grenzfläche im Inneren des Spritzengehäuses 100 liegen das zweite offene Ende des Spritzenkörpers 102 und das erste offene Ende des Spritzenkörpersaufsatzes 104 aneinander und sind deshalb in der schematischen Darstellung der Außenseite des Spritzengehäuses 100 nicht dargestellt. Die beiden gestrichelten, vertikal verlaufenden Linien deuten den vertikal durch das Spritzengehäuse 100 hindurch verlaufenden Kanal an, welcher sich im Inneren des Spritzengehäuses 100 befindet. Der durchgehende Kanal ist von der Zusammenführung des ersten Kanals (Teil des durchgehenden Kanals im Spritzenkörper 102) mit dem zweiten Kanal (Teil des durchgehenden Kanals im Spritzenkörperaufsatz 104) gebildet. Die Innenwand des durchgehenden Kanals begrenzt mit den beiden Membranen 106, 108 einen Teil des durchgehenden Kanals, in welches ein gewünschtes Matrixmaterial eingebracht werden kann. Dieser Teil des durchgehenden Kanals kann gemäß den obigen Ausführungen funktional als Extraktionsvolumen bezeichnet werden, da in dem Extraktionsvolumen mittels des Matrixmaterials eine Zielsubstanz aus wässrigen Phasen extrahiert (herausgefiltert) werden kann. Das Matrixmaterial kann beispielsweise vor dem Zusammenstecken der beiden Teile des beispielhaften Spritzengehäuses 100 in das offene Extraktionsvolumen auf die zweite Membran 108 aufgebracht werden und der entsprechend andere Teil des Spritzengehäuses 100 kann dann auf diesen Teil aufgesetzt werden und mit diesem zusammengesteckt, beispielsweise verschraubt werden. Alternativ kann das Matrixmaterial auch auf die erste Membran 106 aufgebracht werden, sofern der Spritzenkörper 102 beim Befüllen um 180° (kopfüber) gedreht wird. Nach dem einmaligen Zusammenstecken sind die beiden das Spritzengehäuse 100 ausbildenden Teile unlösbar miteinander verbunden, so dass das Spritzengehäuse 100 nicht wiederholt geöffnet und dann wieder zusammengesetzt werden kann. Zu diesem Zweck kann die mechanische Schnittstelle zwischen den beiden Teilen als ein Einmalverschluss eingerichtet sein, so dass der Spritzenkörper 102 nicht wieder vom Spritzenkörperaufsatz 104 gelöst werden kann. In Figur 1 ist das Grundkonzept des erfindungsgemäßen Spritzenkörpers 100 dargestellt. Dieses kann zahlreichen Modifikationen und Abwandlungen unterliegen, von denen einige in den weiteren Figuren dargestellt und erläutert werden.

In **Figur 2** ist als großes Abbild eine Seitenansicht einer beispielhaften Ausführungsform des Spritzenkörpers 102 dargestellt. Der beispielhafte Spritzenkörper 102 kann als ein Hohlzylinder mit einer gewissen Wanddicke ausgebildet sein. Dabei kann die Innenwand des Hohlzylinders den ersten Kanal 206 definieren. Der auf der Innenseite des Spritzenkörpers 102 zwischen dem ersten offenen Ende 110 und dem zweiten offenen Ende 208 liegende erste Kanal 206 ist im oberen Bereich mittels der gestrichelten Linien angedeutet. Im unteren Bereich weist der beispielhafte Spritzenkörper 102 einen geringeren Außendurchmesser auf und seiner Außenwand ist in diesem Ausführungsbeispiel ein Gewinde 204 aufgeprägt. Das Gewinde ist als Außengewinde auf der Außenfläche eines Kragens angeordnet, welcher sich aus dem gewindefreien Teil des Spritzenkörpers 102 axial nach außen (in Figur 2 nach unten) erstreckt. Mittels des Außengewindes 204 kann der Spritzenkörper 102 formschlüssig mit einem entsprechend dazu passenden Innengewinde des Spritzenkörperaufsatzes 104 zusammengefügt werden. Die Zuordnung von Innen- und Außengewinde zu den jeweiligen Bauteilen ist hierbei beliebig, so dass das Innengwinde ebenso auf dem Kragen des Spritzenkörpers 102 angeordnet sein kann und in ein Außengewinde des Spritzenkörperaufsatzes 104 eingeschraubt werden kann. Am ersten offenen Ende 110 kann ein Fingerrand 202 angeordnet sein. Eine Draufsicht 200 auf den beispielhaften Spritzenkörper 104 ist auf der rechten Blattseite durch den geschwungenen Pfeil angedeutet. Demnach kann der Fingerrand 202 eine ovale Form haben und um das erste offene Ende 110 des Spritzenkörpers angeordnet sein. Die Form des Fingerrandes 202 kann an die Verwendung des Spritzengehäuses 100 angepasst werden, beispielsweise an die Verwendung in einer weiter unten beschriebenen Pipettiervorrichtung, und beispielsweise auch kreisrund oder rechteckig sein.

Die erste Membran 106 ist derart im ersten Kanal 206, d.h. an der Innenwand des Spritzenkörpers 102 angebracht oder integral mit dieser ausgebildet, dass sie bis auf ihre Membrandicke selbst keine Veränderung des Durchmessers des ersten Kanals 206 hervorruft. Die erste Membran 106 kann in der Innenwand des Spritzenkörpers 102 befestigt sein, sich beispielsweise in diese hinein erstrecken. Der Rand der ersten Membran 106 kann beispielsweise beim Ausbilden des Spritzenkörpers 102 in diesen eingebracht werden und so bei diesem Prozess stoffschlüssig mit seiner Innenwand verbunden werden. Dadurch kann die erste Membran 106 ohne einen zusätzlichen Haltering, auf dem sie aufgeklebt wird und in die gewünschte Position innerhalb des ersten Kanals 206 geschoben wird, oder anderweitige Befestigungsstrukturen in dem ersten Kanal 206 vorliegen. Somit besteht keine Gefahr, dass z.B. Partikel aus der Probe an einer solchen Befestigungsstruktur hängen bleiben - beispielsweise zwischen der Innenfläche des ersten Kanals 206 und der Außenfläche eines Halterings. Des Weiteren kann der erste Kanal 206 günstige Strömungseigenschaften bieten, da er keine strömungsverändernden Strukturen wie Kanten oder Vorsprünge in seinem Inneren aufweist, die von etwaigen Befestigungsstrukturen herstammen. Durch die Lage der ersten Membran 106 innerhalb des ersten Kanals 106, also durch ihren Abstand zum zweiten offenen Ende 112, kann die Größe des Extraktionsvolumens bestimmt werden. In Abwandlung zur der in Figur 2 dargestellten Anordnung kann die erste Membran 106 auch höher oder tiefer innerhalb des vertikal verlaufenden ersten Kanals 206 angeordnet sein, sie kann auch innerhalb des Teils des Spritzenkörpers 102 angeordnet sein, dem das Gewinde 204 aufgeprägt ist.

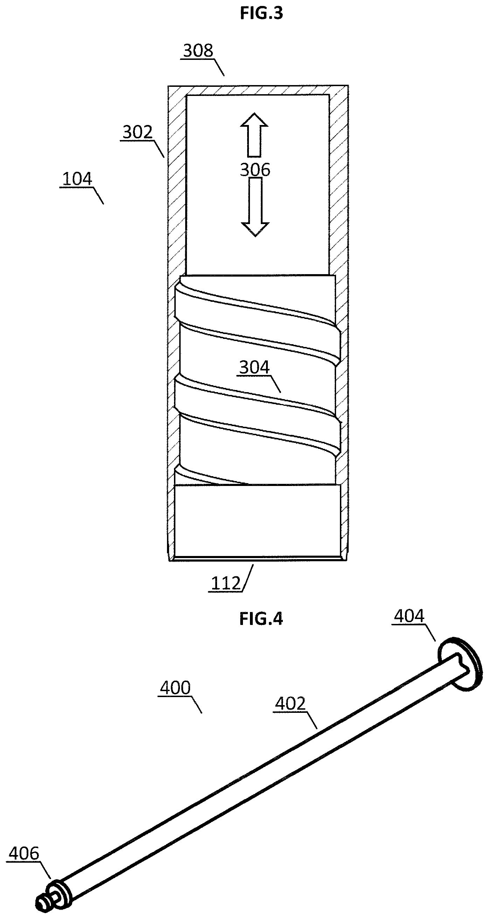

Ein beispielhafter, zum Spritzenkörper 102 aus Figur 2 passender Spritzenkörperaufsatz 104 ist in **Figur 3** dargestellt, ebenfalls in einer Seitenansicht. Der Spritzenkörperaufsatz 104 kann dem Spritzenkörper 102 dahingehend ähnlich aufgebaut sein, als dass er ebenfalls als ein Hohlzylinder eingerichtet sein kein, bei dem sich zwischen seinem ersten offenen Ende 308 und seinem zweiten offenen Ende 112 ein zweiter Kanal 306 erstreckt, welcher einen durchgehend gleichen Durchmesser aufweisen kann, der zudem dem Durchmesser des ersten Kanals 206 entsprechen kann. Somit kann der Übergang zwischen den beiden Teilkanälen 206, 306, welche den durchgehenden Kanal des Spritzengehäuses 100 ausbilden, ohne Verengungen und stufenlos sein, so dass eine Fluidströmung zwischen den beiden Teilkanälen 206, 306 turbulenzfrei erfolgen kann. Wenn der Spritzenkörper 102 ein Außengewinde trägt, dann ist das Gewinde 304 des Spritzenkörperaufsatzes 104 als Innengewinde eingerichtet (wie in Figur 3 dargestellt) und in der Innenfläche der Wandung 302 des Spritzenkörperaufsatzes 104 bereitgestellt. Das Gewinde 304, welches zur besseren Veranschaulichung in Figur 3 als eine nur in einem Teilbereich des Spritzenkörperaufsatzes 104 angeordnete Struktur dargestellt ist, kann unmittelbar am ersten offenen Ende 308 beginnen und so ein kraftarmes Zusammenführen mit dem Spritzenkörper 102 ermöglichen. Die zweite Membran 108 wurde nicht explizit dargestellt, sie kann an einer beliebigen Stelle bzw. bei einer beliebigen Höhe innerhalb des zweiten Kanals 306 angeordnet sein. So kann die zweite Membran 108 beispielsweise an einer beliebigen Stelle bzw. bei einer beliebigen Höhe unterhalb des Gewindes 306 im zweiten Kanal 306 oder anders ausgedrückt an einer beliebigen Stelle bzw. bei einer beliebigen Höhe des zweiten Kanals 306 in dessen gewindefreiem Abschnitt angeordnet sein. Die zweite Membran 108 kann, in gleicher Weise wie die erste Membran 106 mit der Wandung des Spritzenkörpers 102, ebenfalls integral mit der Wandung 302 des Spritzenkörperaufsatzes 104 verbunden sein. Wahlweise kann die erste Membran 106 und/oder die zweite Membran 108 an dem entsprechenden offenen Ende aufgeklebt oder anderweitig befestigt sein, mit dem der Spritzenkörper 102 bzw. der Spritzenkörperaufsatz 104 verschraubt wird, so dass sie zusätzlichen Halt erhält von den auf sie draufdrückenden Rändern des Spritzenkörpers 102 und des Spritzenkörperaufsatzes 104. Obwohl der Rand des zweiten offenen Endes 112 des Spritzenkörperaufsatzes 104 als eben dargestellt ist, ist dieses keine zwingende Eigenschaft. Je nach fluidmechanischen Erfordernissen kann der Rand des zweiten offenen Endes 112 uneben ausgeführt sein, indem er beispielsweise Freiräume oder Ausnehmungen aufweist, die ihrerseits Vorsprünge oder Stege definieren, so dass das untere Ende des Spritzengehäuses nicht mit seinem Rand vollumfänglich auf einer Unterlage aufliegt.

In **Figur 4** ist eine Ausführungsform eines Kolbens 400 dargestellt, welcher in Verbindung mit dem Spritzengehäuse 100 gemäß verschiedenen Ausführungsbeispiele verwendet werden kann, um eine vollwertige Spritze auszubilden. Der Kolben 400 weist eine Kolbenstange 402 auf, welche an dem hinteren Ende ein Daumenteil 404 und an dem dazu entgegengesetzten, dem vorderen Ende einen Kolbenkopf 406 aufweist. Auf den Kolbenkopf 406 kann ein entsprechender Gummipfropfen aufgesetzt werden, welcher vollumfänglich mit der Wandung des durchgehenden Kanals in Kontakt steht und die beiden durch ihn getrennten Teile des Kanals luftdicht voneinander abtrennt. Der Gummipfropfen kann nach einer erfolgten Verfahrenssequenz (beispielsweise nach einer erfolgten Zellreinigung) gegen einen unbenutzten oder einen entkeimten Gummipfropf ausgetaucht werden, wodurch eine Kontamination des Inhalts des Spritzengehäuses 100 mit Fremdstoffen verhindert werden kann. Da die Kolbenstange 402 samt Daumenteil 404 nicht mit dem Inhalt der Spritzengehäuses 100 in Kontakt kommt, können diese ohne vorherige Reinigung/Entkeimung wieder verwendet werden. Der Daumenteil 404 kann manuell oder auch maschinell in das Spritzengehäuse 100 hineingedrückt oder aus diesem herausgezogen werden. Je nach Länge des Spritzengehäuses 100 und der daran angepassten Kolbenstange 402 kann auf dieser zwischen dem Kolbenkopf 406 und dem Daumenteil 404 ein Stabilisierungselement angeordnet sein. Bei dem Stabilisierungselement kann es sich beispielsweise um mindestens eine Scheibe mit einer bestimmten Dicke handeln, deren Rand mit der Innenwand des durchgehenden Kanals in Kontakt steht. Der Durchmesser der Scheibe kann jedoch auch geringfügig kleiner sein als der Durchmesser des durchgehenden Kanals innerhalb des Spritzenkörpers 100. Bei dem Stabilisierungselement kann es sich aber auch um Lamellen handeln, welche beispielsweise jeweils um 90° zueinander gedreht an der Kolbenstange 402 angeordnet sind und sich bis zur Innenwand des Spritzengehäuses 100 erstrecken. Mittels des Stabilisierungselements kann die Kolbenstange 402 innerhalb des Spritzenkörpers 100 geführt und zentriert gehalten werden. Bei im Verhältnis zu ihrem Querschnitt übermäßig langen Spritzengehäusen 100 kann dadurch die entsprechend lang ausgebildete Kolbenstange 402 sicher im Inneren des Spritzengehäuses 100 geführt werden.

Wie bereits weiter oben erwähnt, kann der Kolben 400 einen Kolbenstopper aufweisen, welcher zur Einstellung seiner Eintauchtiefe in das Spritzengehäuse 100 dienen kann. Der Kolbenstopper kann beispielsweise als eine Scheibe oder ein Plättchen eingerichtet sein, welches an einer vorbestimmten Stelle an der Kolbenstange 400 angeordnet ist und in einer Ebene senkrecht zu der Kolbenstange 400 verläuft. Der Kolbenstopper kann den Querschnitt des Kolbens 400, insbesondere der Kolbenstange 402 derart vergrößern, dass er über Stelle hinaus, an der der Kolbenstopper angebracht ist, nicht weiter in das Spritzengehäuse 100 eingeschoben werden kann. Beispielsweise kann die Kolbenstange 400 mehrere Stellen aufweisen, an denen ein solcher Kolbenstopper variabel angebracht werden kann. Auf diese Weise kann ein Kolben 400 durch Versetzen des Kolbenstoppers zu einer anderen Position am Kolben 400 sehr einfach an die gewünschte Eintauchtiefe in das dazugehörige Spritzengehäuse 100 angepasst werden und damit flexibel verwendet werden. Alternativ kann auch die Kolbenstange 402 selbst ab einer gewissen Stelle dicker ausgebildet sein, so dass ihr Querschnitt größer ist als der Querschnitt der Öffnung am ersten offenen Ende des Spritzenkörpers 102. In weiteren Ausführungsbeispielen des Kolbens 400 kann der Daumenteil 404 auch zugleich als Kolbenstopper fungieren, da er einen Querschnitt aufweist, welcher zumindest teilweise über den Querschnitt des Kanals hinausgeht so dass der Daumenteil 404 auch geeignet ist, ein Eintauchen des Kolbens 400 in den Spritzenkörper 100 zu verhindern. Die erlaubte Eintauchtiefe des Kolbens 400 in das Spritzengehäuse 100 kann durch die Position der ersten Membran 106 vorgegeben sein, welche beim Herunterdrücken des Kolbens 400 offensichtlich nicht von dem darauf aufgesetzten Kolbenpfropf perforiert/zerstört werden soll.

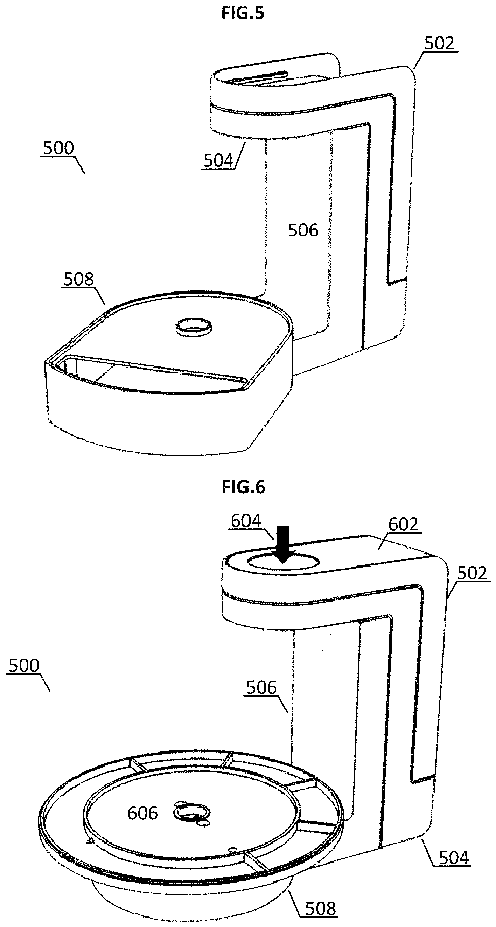

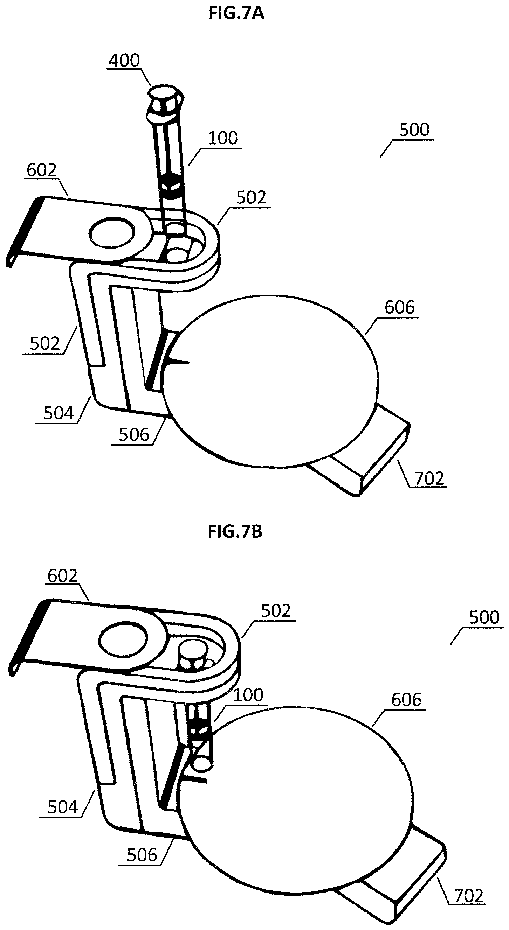

In **Figur 5** ist eine perspektivische 3D-Ansicht einer beispielhaften Ausführungsform einer Pipettiervorrichtung 500 dargestellt, bei welcher das erfindungsgemäße Spritzengehäuse 100 zusammen mit dem Kolben 400 verwendet werden können. Die beispielhafte Pipettiervorrichtung 500 kann eine erste Haltevorrichtung 504 und eine zweite Haltevorrichtung 502 aufweisen. Die erste Haltevorrichtung 504 ist eingerichtet ein erfindungsgemäßes Spritzengehäuse 100 aufzunehmen und in einer im Wesentlichen vertikalen Lage zu halten. Die zweite Haltevorrichtung 502 ist eingerichtet, einen in dem Spritzengehäuse 100 eingesetzten Kolben 400 zu halten und darin axial zu bewegen. In Figur 5 ist gezeigt, dass bei der beispielhaften Pipettiervorrichtung 500 die zweite Haltevorrichtung 502 L-förmig ausgebildet ist und auf der ersten Haltevorrichtung 504 aufliegt. Die erste Haltevorrichtung 504 dient sozusagen als bewegliche Basis für die zweite Haltevorrichtung 502. Die zweite Haltevorrichtung 502 kann, beispielsweise mittels eines Elektromotors, gegenüber der ersten Haltevorrichtung 504 bewegt werden. Die erste Haltevorrichtung 504 hat bei dieser Ausführungsform ebenfalls eine im Wesentlichen L-förmige Form und liegt wiederum auf einem Gehäuseteil 506 auf. Die erste Haltevorrichtung 504 kann, beispielsweise mittels eines Elektromotors, gegenüber dem Gehäuseteil 506 bewegt werden. Am Gehäuseteil 506 ist ein Halter 508 angeordnet, auf welchem ein Probenteller (nicht in Figur 5 gezeigt) platziert werden kann. Das Gehäuseteil 506 kann integral mit dem Halter 508 verbunden sein und zusammen damit eine stabile Gehäusebasis für die Pipettiervorrichtung 500 bilden. Die oben angesprochene im Wesentlichen vertikale Lage des Spritzengehäuses 100 kann beispielsweise einer Lage entsprechen, in der der Spritzenkörperaufsatz 104 nach unten gerichtet ist, also zum Probenteller 508 hin. Dieser Aspekt wird insbesondere den Figuren 7A und 7B verdeutlicht.

Bei der in Figur 5 gezeigten beispielhaften Pipettiervorrichtung 500 ist diese in einem eingefahrenen Zustand gezeigt, bei dem ein eingesetztes Spritzengehäuse 100 am tiefst möglichen Punkt gehalten werden würde und ein darin eingesetzter Kolben 400 weitest möglich in dem Spritzengehäuse 100 eingeschoben vorliegen würde. Aus der in Figur 5 dargestellten Ausgangslage kann die erste Haltevorrichtung 504 relativ zum Gehäuseteil 506 vertikal nach oben bewegt werden. Die zweite Haltvorrichtung 502 wiederum kann relativ zur ersten Haltevorrichtung 504 vertikal nach oben bewegt werden. Sowohl zwischen dem Gehäuseteil 506 und der ersten Haltevorrichtung 504 wie auch zwischen der ersten Haltevorrichtung 504 und der zweiten Haltevorrichtung 502 kann jeweils mindestens eine Schiene oder ein anderes funktional äquivalentes Element angeordnet sein, auf der die Bauteile jeweils gegeneinander verschoben werden können. Um die Elektromotoren so wenig wie möglich zu beanspruchen, kann es von Vorteil sein, wenn der erste Elektromotor, welcher die erste Haltevorrichtung 504 gegenüber dem Gehäuseteil 506 hoch und runterbewegt, im Wesentlichen im Gehäuseteil 506 angeordnet ist und der zweite Elektromotor, welcher die zweite Haltevorrichtung 502 gegenüber der ersten Haltevorrichtung 504 hoch- und runterbewegt, im Wesentlichen in der ersten Haltevorrichtung angeordnet ist. Diese Anordnung der Elektromotoren ist jedoch nicht zwingend erforderlich und eine Abweichung davon hat keinen Einfluss auf die Funktionsweise der in Figur 5 gezeigten beispielhaften Pipettiervorrichtung 500.

Unabhängig von der Anordnung der Elektromotoren und der konkreten äußerlichen Erscheinungsform der Pipettiervorrichtung 500 sind die erste Haltevorrichtung 504 und die zweite Haltevorrichtung 502 relativ zueinander bewegbar. Bei der beispielhaften Ausführungsform der Pipettiervorrichtung 500 in Figur 5 kann dieses erfolgen, indem entweder die zweite Haltevorrichtung 502 relativ zu der ersten Haltevorrichtung 504 aktiv bewegt wird (im Folgenden erster Bewegungsmodus) oder die erste Haltevorrichtung 504 relativ zum Gehäuseteil 506 aktiv bewegt wird und gleichzeitig die zweite Haltevorrichtung 502 relativ zur ersten Haltevorrichtung 504 in die Gegenrichtung aktiv bewegt wird (im Folgenden zweiter Bewegungsmodus), so dass sich von außen betrachtet nur die erste Haltevorrichtung 504 bewegt und die zweite Vorrichtung 502 still zu stehen scheint (sofern beide mit gleicher Geschwindigkeit bewegt werden). Der zweite Bewegungsmodus ist durch die Bauart der beispielhaften, in Figur 5 gezeigten Pipettiervorrichtung 500 bedingt, bei der die erste Haltevorrichtung 504 als eine bewegliche Basis für die zweite Haltevorrichtung 502 fungiert. Der zweite Bewegungsmodus kann für den Laborbetrieb als eher von untergeordneter Bedeutung betrachtet werden, wenn man sich die funktionale Zuordnung der beiden Haltevorrichtungen 504, 502 vor Augen führt. Die Lagerung der zweiten Haltevorrichtung 502 auf der beweglichen ersten Haltevorrichtung 504 kann von Vorteil sein, weil so mit dem Betrieb nur eines Elektromotors die gesamte Spritze nach oben oder nach unten versetzt werden kann, ohne dass der darin eingesetzte Kolben 400 bewegt wird. Eine Bewegung des Kolbens 400 innerhalb des Spritzenkörpers 100 ist stets entweder mit einer Fluidverdrängung aus dem oder mit einer Fluideinleitung in den Spritzenkörper 100 verbunden. Deshalb ist die Anordnung der beiden Haltevorrichtungen 504, 502 in Figur 5 durchaus als vorteilhaft zu sehen, da der Fall, wo die Spritze nach oben oder nach unten versetzt wird und gleichzeitig das Fluidvolumen in der Spritze angepasst werden muss, als eher selten einzustufen ist.

Die in Figur 5 gezeigte beispielhafte Ausführungsform der Pipettiervorrichtung 500 kann beispielsweise dahingehend abgewandelt werden, dass die zweite Haltevorrichtung 502 nicht auf der ersten Haltevorrichtung 504 lagert, sondern beispielsweise der ersten Haltvorrichtung 504 diametral gegenüber angeordnet oder versetzt angeordnet ist, so dass statt der ersten Haltevorrichtung 504 das Gehäuseteil 506 als Basis oder Auflage fungiert, gegenüber welcher die zweite Haltevorrichtung 502 unabhängig von der ersten Haltevorrichtung 504 bewegt werden kann. Bei einem solchen Aufbau können die erste Haltevorrichtung 504 und die zweite Haltevorrichtung 506 jeweils unabhängig voneinander relativ zum Gehäuseteil 506 und damit auch relativ zueinander bewegt werden. Bei der in Figur 5 gezeigten Ausführungsform der Pipettiervorrichtung 500 ist dies, wie oben erklärt, nicht der Fall, da ein aktives Bewegen der ersten Haltevorrichtung 504 ein passives Mitbewegen der zweiten Haltevorrichtung 502 zur Folge hat. Zusätzlich ist zu betonen, dass letztlich die konkrete Form der einzelnen Bauteile der beispielhaften Pipettiervorrichtung 500 nicht auf ihre Darstellung in Figur 5 beschränkt ist, sondern klarerweise gestalterischen Ansprüchen angepasst werden kann unter Beibehaltung des hier vorgestellten Kerngedankens der Offenbarung.

In **Figur 6** ist eine im Wesentlichen zu der in Figur 5 gezeigten Pipettiervorrichtung strukturgleiche Pipettiervorrichtung 500 in einer perspektivischen 3D-Ansicht gezeigt. Einander entsprechende Bauteile sind deshalb mit gleichen Bezugszeichen versehen und werden nicht erneut im Detail beschrieben.

In Figur 5 ist die zweite Haltevorrichtung 502 ohne die dazugehörige Abdeckung 602 gezeigt, die in Figur 6 zu sehen ist. Bei der gezeigten Ausführungsform der Pipettiervorrichtung 500 ist die Abdeckung 602 L-förmig ausgebildet und kann, nachdem ein Spritzengehäuse 100 mit Kolben 400 in die Pipettiervorrichtung 500 eingesetzt worden ist, von hinten auf die zweite Haltevorrichtung 502 draufgeschoben werden. Der Pfeil 604 soll die Position andeuten, an welcher unter der Abdeckung 602 eine eingesetzte Spritze von der ersten Haltevorrichtung 504 gehalten wird. Dazu ist sowohl in der ersten Haltevorrichtung 504 und in der zweiten Haltevorrichtung 502 eine Öffnung vorgesehen, wobei die Öffnungen übereinander angeordnet sind. Auf die Art und Weise, wie das erfindungsgemäße Spritzengehäuse 100 mit Kolben 400 in die beispielhafte Pipettiervorrichtung 500 eingesetzt wird und darin gehalten wird, wird bei der Beschreibung der Figuren 7A und 7B näher eingegangen. In Figur 6 ist ferner ein Probenteller 606 dargestellt, auf welchen Proben gesetzt werden können und zur Verarbeitung in eine Position unterhalb der ersten Haltevorrichtung 504 und der zweiten Haltevorrichtung 502 gebracht werden können. Anders ausgedrückt kann der Probenteller 606 nach Bedarf gedreht werden, um verschiedene Proben in eine Position unterhalb der ersten Haltevorrichtung 504 und der zweiten Haltevorrichtung 502 zu bringen, in welcher eine in die Pipettiervorrichtung 500 gemäß verschiedenen Ausführungsbeispielen eingesetzte Spritze (nicht in Figur 5 gezeigt) gehalten wird. Die Spritze kann dann in die entsprechende Probe abgesenkt werden und in Kontakt mit einer in der Probe vorliegenden wässrigen Phase treten. Dieser Aspekt wird im Folgenden anhand der Figuren 7A und 7B genauer erläutert.

Anhand der beispielhaften Pipettiervorrichtung 500, welche in den **Figuren 7A** und **7B** in einer perspektivischen 3D-Draufsicht dargestellt ist, wird nun im Folgenden insbesondere das Inbetriebnehmen der Pipettiervorrichtung erläutert, welches das Einsetzen des erfindungsgemäßen Spritzengehäuses 100 gemäß verschiedenen Ausführungsbeispielen samt Kolben 400 aufweist. Da der Aufbau der in den Figuren 7A und 7B gezeigten Pipettiervorrichtung 500 mit dem in den Figuren 5 und 6 gezeigten Aufbau weitgehend übereinstimmt, sind einander entsprechende Bauteile deshalb mit gleichen Bezugszeichen versehen und werden nicht erneut im Detail beschrieben.

Ein Merkmal, das nicht in den Figuren 5 und 6 dargestellt ist, ist das digitale Bedienfeld 702, welches tastempfindliche Bedienfelder, mit denen die Pipettiervorrichtung 500 bedient werden kann, sowie zusätzlich Statusindikatoren aufweisen kann. Das digitale Bedienfeld 702 kann integral mit dem Gehäuseteil 506 ausgebildet sein. Mit einem solchen Bedienfeld 702 können beispielsweise Verfahrenssequenzen (z.B. Pipettiervorgänge) gestartet, unterbrochen, gestoppt oder angepasst werden. Die Verfahrenssequenzen können beispielsweise über eine Datenschnittstelle an der Pipettiervorrichtung 500 von einem Datenträger eingelesen werden, beispielsweise von einem USB-Stick oder einer SD-Karte. Unter einer Verfahrenssequenz kann eine vordefinierte Abfolge von Verfahrensschritten verstanden werden, bei der wässrige Phasen in vorgegebener Zeit bzw. in vorgegebener Geschwindigkeit aus dem Spritzengehäuse 100 in entsprechende Proben oder aus diesen in das Spritzengehäuse 100 befördert werden. Der Einschub, in den der Datenträger eingebracht werden kann, kann beispielsweise am Gehäuseteil 506 angeordnet sein, etwa unterhalb des Probentellers 606 oder in dem senkrecht nach oben ragenden Teil des Gehäuseteils 506. Durch das Abrufen von vordefinierten Verfahrenssequenzendateien von einem miniaturisierten Datenträger kann die beispielhafte Pipettiervorrichtung 500 sehr flexibel verwendet werden und kann beispielsweise außerhalb des Labors als mobile Einheit eingesetzt werden, da zu ihrem Betrieb kein Rechner (PC) erforderlich ist. Für den Einsatz als mobile Einheit (oder auch unabhängig davon) kann die Pipettiervorrichtung 500 im Gehäuseteil 506 einen Akku aufweisen. Selbstverständlich kann die beispielhafte Pipettiervorrichtung 500 auch über eine Datenschnittstelle mit einem Rechner gekoppelt werden und von dort direkt angesteuert werden. Bei dieser Datenschnittstelle kann es sich um dieselbe Schnittstelle handeln, wie für die Ankopplung des Datenträgers, oder um eine gesonderte drahtlose Schnittstelle (z.B. WLAN, Bluetooth oder NFC).

In Figur 7A ist die Pipettiervorrichtung 500 vor Einsetzen einer Spritze dargestellt, insbesondere einer Spritze aufweisend das erfindungsgemäße Spritzengehäuse 100 samt Kolben 400. Dazu kann die Abdeckung 602 zurückgeschoben werden und die Spritze in die in der ersten Haltevorrichtung 504 und in der zweiten Haltevorrichtung 502 vorgesehene Öffnung eingesetzt werden. Die Öffnung in der ersten Haltevorrichtung 504 ist derart ausgebildet, dass zum einen der zylinderförmige Teil des Spritzengehäuses 100 durch die Öffnung hindurchpasst und sich frei hängend nach unten aus der ersten Haltevorrichtung 504 erstreckt, zum anderen aber dessen Fingerrad (siehe Element 202 in Figur 2) nicht durch die Öffnung hindurchpasst sondern in ihr arretiert wird. Von oben betrachtet kann der Querschnitt der Projektion der Öffnung dem Querschnitt des Spritzengehäuses 100 entsprechen, so dass das Spritzengehäuse 100 bis zum Fingerrand in die Öffnung eingeschoben werden kann. Nach dem Einsetzen der Spritze in die Öffnung in der ersten Haltevorrichtung 504 ist die Spritze lateral fixiert. In der Öffnung können in ihrem Rand zumindest teilweise Furchen vorgesehen sein. Die Spritze kann dann in der Öffnung um einen bestimmen Winkel gedreht werden, so dass der Fingerrand in die Furchen hineingleitet und durch diese zusätzlich fixiert. Auf diese Weise kann die Spritze auch vertikal fixiert wird, so dass sie selbst relativ zur ersten Haltevorrichtung 503 keine Freiheitsgrade mehr hat. Die Furchen können so ausgebildet sein, dass der Fingerrand nach dem Drehen der Spritze in der Öffnung einrastet. Dadurch kann das Risiko einer selbstständigen Herauslösung des Spritzengehäuses 100 aus der ersten Haltevorrichtung 504 während einer Verfahrenssequenz eliminiert werden. Es können jedoch auch andere Befestigungsmechanismen vorgesehen sein, welche das Spritzengehäuse 100 an die erste Haltevorrichtung 504 fixieren, etwa Klammern oder Haltebügel.

Die Öffnung in der zweiten Haltevorrichtung 502 ist über der Öffnung der ersten Haltevorrichtung angeordnet. Ihr Querschnitt kann größer sein als der Querschnitt der Öffnung in der ersten Haltevorrichtung 504. Der Querschnitt der Öffnung in der zweiten Vorrichtung 502 ist jedenfalls so geformt, dass die Spritze (samt Fingerrand) durch sie hindurch in die Öffnung in der ersten Haltvorrichtung 504 eingesetzt werden kann. Somit kann die Form der Öffnung in der ersten Haltevorrichtung 504 von der Form der Öffnung in der zweiten Haltevorrichtung 502 umfasst sein. Nach dem Einsetzen der Spritze bzw. des Spritzengehäuses 100 gemäß verschiedenen Ausführungsbeispielen kann der Kolben 400, sofern er noch nicht darin angeordnet ist, in das Spritzengehäuse 100 eingesetzt werden. Nachfolgend kann der Kolben 400 an der zweiten Haltevorrichtung 502 befestigt werden. Dieser Zustand ist in Figur 7B dargestellt. Dazu kann an der Unterseite des Deckels 602 ein Fixierelement vorgesehen sein, welches zur Aufnahme des Daumenteils (siehe Element 404 in Figur 4) des Kolbens 400 eingerichtet ist. Das Fixierelement kann in der beispielhaften Pipettiervorrichtung 500 in Figur 6 in etwa in dem mit dem Pfeil 604 markierten Bereich (an der Unterseite des Deckels 602) angeordnet sein. Bei dem Fixierelement kann es sich beispielsweise um ein halbringförmiges oder U-förmiges Element handeln, welches auf seiner Innensite eine Nut aufweist, in welche der Fingerrand 202 von der offenen Seite des Fixierelements her eingeschoben werden kann. Mit der Innenseite ist hierbei die Seite gemeint, welche dem Krümmungsmittelpunkt des Fixierelements zugewendet ist. Dabei ist das an der Unterseite des Deckels 602 angeordnete Fixierelement zu der Richtung hin offen, in die auch der Deckel 602 auf die oder in die zweite Haltevorrichtung 502 geschoben wird, d.h. in den Figuren 7A und 7B zur rechten Blattseite.

Wird nun der Deckel 602 geschlossen, indem von der in Figur 7B gezeigten Ausgangslage nach rechts auf die zweite Haltevorrichtung 502 geschoben wird, schiebt sich das Fixierelement mit seiner Offenen Seite voran über den Fingerrand 202 des Kolbens 400 und fixiert ihn damit vollständig vertikal und im Zusammenspiel mit dem fixierten Spritzengehäuse 100, in welchem der Kolben 400 vorliegt, auch vollumfänglich lateral. Die Breite der Öffnung in der Nut des Fixierelements kann an die Dicke des Fingerrandes 202 angepasst sein derart, dass die die Nut des Fixierelements zumindest den Rand des Fingerrandes 202 zangenartig umfasst. Anders ausgedrückt wird durch Draufschieben des Deckels 602 auf den Fingerrand des Spritzengehäuses 100 das Fixierelement seitlich zumindest teilweise auf den Fingerrand 202 gesteckt. Um das Einführen des Fingerrandes 202 in den vom Fixierelement gebildeten Einschub so zu erleichtern, dass der Fingerrand 202 vor dem Draufschieben des Deckels 602 nicht auf Höhe der Nut des Fixierelements gebracht werden muss, kann die Nut ab dem offenen Ende des Fixierelements stetig an Breite zunehmen und eine Art Auffangtrichter für den Fingerrand 202 bilden, so dass dieser aus einer beliebigen Position innerhalb eines vorgegebenen Toleranzbereiches (der durch die Breite der Nut am offenen Ende des Fixierelements bestimmt ist) in das Fixierelement hineingeführt wird.

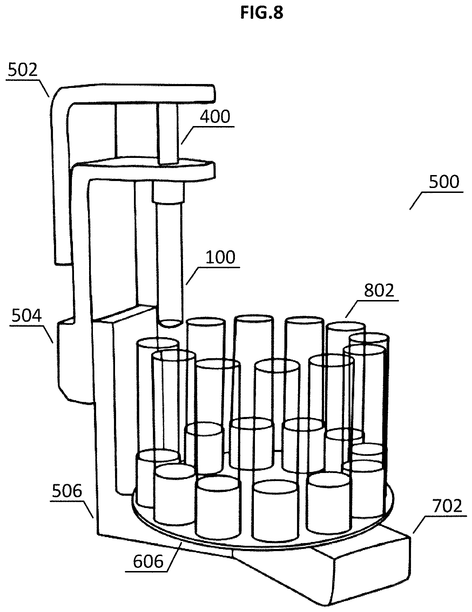

Nachdem der Deckel 602 nun auf das zweite Halteelement 502 geschoben worden ist und der Fingerrand 202 des Kolbens 400 mit dem Fixierelement in Eingriff gekommen ist, ist die Pipettiervorrichtung 500 für den Betrieb vorbereitet. In **Figur 8** ist die beispielhafte Pipettiervorrichtung 500 in einer Momentaufnahme im Betrieb gezeigt. Die auf dem Probenteller 606 angeordneten Proben 802 können in einer vorgegebenen Sequenz unter die Spritze bzw. das Spritzengehäuse 100 gebracht werden. Ist eine gewünschte Probe 802 unter die Spritze gefahren worden, kann diese in die darunterliegende Probe 802 abgesenkt werden und es kann die sich darin befindende wässrige Lösung in die Spritze befördert werden oder eine wässrige Lösung kann aus der Spritze in die entsprechende Probe 802 befördert werden. Wie in Figur 8 dargestellt, ist die erste Haltevorrichtung 504 für die Positionierung des erfindungsgemäßen Spritzenkörpers 100 zuständig, wohingegen die zweite Haltevorrichtung 502, an der der Kolben 400 mittels des Fingerrandes 400 (nicht in Figur 8 zu sehen) befestigt ist, für die Verschiebung des Kolbens 400 innerhalb der Spritze zuständig ist. Obgleich alle in Figur 8 dargestellten Probengefäße 802 gleich groß sind, können selbstverständlich Probengefäße 802 unterschiedlicher Größen in einer Verfahrenssequenz verwendet werden, da ein Vorzug der beispielhaften Pipettiervorrichtung 500 die Möglichkeit der vertikalen Verstellung der Spritze bzw. des Spritzengehäuses 100 ist. Die Größe der in einer Verfahrenssequenz verwendeten Proben 802 kann im Vorfeld in einer zu dieser Verfahrenssequenz gehörenden Datei (Sequenzdatei) festgelegt werden. Alternativ oder Zusätzlich kann die beispielhafte Pipettiervorrichtung 500 mindestens einen Füllstandsensor aufweisen, so dass zum einen die Größe des gerade ausgewählten Probenglases 802 und auch dessen Füllstandshöhe automatisch während der Verfahrenssequenz ermittelt werden können. Bei dem Füllstandsensor kann es sich um einen optischen oder akustischen Sensor handeln. Die Unterscheidung zwischen der Höhe des gerade ausgewählten Probengefäßes 802 und seinem Füllstand kann auf Basis einer Änderung der Reflexion erfolgen, die davon abhängt, ob das vom Füllstandsensor ausgesendete Signal auf einen leeren Bereich des Probengefäßes 802, einen gefüllten Bereich des Probengefäßes 802 oder auf gar keines der beiden trifft. Der Füllstandsensor kann beispielsweise in dem Teil des Gehäuseteils 506 angeordnet sein, der sich vor dem gerade ausgewählten Probengefäß 802 befindet. Zudem kann der Füllstandsensor innerhalb des Gehäuseteils 506 vertikal bewegbar sein, beispielsweise mittels eines Elektromotors, so dass eine Art Einlesevorgang bei jedem neu ausgewählten Probengefäß 802 erfolgen kann, um dessen Größe und Füllstandshöhe zu ermitteln.

Vorliegend wurde eine Spritze beschrieben, welche ein zweiteiliges Spritzengehäuse, in dem ein durch zwei Membranen abgetrennter Bereich bereitgestellt ist (Extraktionsvolumen), und einen Kolben aufweist. Mittels einer speziellen Verbindung der beiden Spritzengehäuseteile miteinander kann die Spritze beispielsweise als eine Einwegspritze eingerichtet sein. Die beiden Teile des Spritzengehäuses können etwa über einen Einweg-Schraubverschluss mit oder ohne Dichtung miteinander verbunden werden. Der Spritzenkörper kann beispielsweise am unteren Gewindeteil mit einer Membran versehen sein. Der Spritzenkörperaufsatz kann an seinem unteren Ende Abstandshalter aufweisen, welche ein vollumfängliches Aufliegen des unteren Endes auf einer ebenen Oberfläche vermeiden. Der Spritzenkörper kann sowohl im unteren als auch im oberen Teil eine Verdickung tragen, die als Kolbenstopper fungieren. Ebenso kann der Kolbenstopper mittels einer Anpassung der Kolbenstange realisiert werden.

Die in dieser Anmeldung beschriebene Untergliederung des Spritzengehäuses gemäß verschiedenen Ausführungsbeispielen mittels der zwei Membranen ermöglicht die Einbringung von Puffermedien in das von den Membranen gebildete Extraktionsvolumen. Die Puffermedien ermöglichen beispielsweise Proteine, Zellen oder andere biologische Materialien abzutrennen.

Das hier vorgestellte Spritzengehäuse kann zur Bildung einer Einwegspritze verwendet werden, die so konzipiert ist, dass durch einen besonderen Verschluss, beispielsweise einen Dreh- oder Steckverschluss oder eine Mischform daraus das Wiederverwerten der Spritze verhindert wird und so etwaige Unsicherheiten im Laborbereich hinsichtlich des Inhalts einer solchen Einwegspritze beseitigt werden können.

Das hier beschriebene Spritzengehäuse zeichnet sich dadurch aus, dass durch die formschlüssige Verankerung der Membranen in dem Spritzengehäuse, beispielsweise indem diese schon während des Spitzgussverfahrens ins Spritzengehäuse eingebracht werden, stufenlose Übergänge zwischen den Kompartimenten geschaffen werden können und so ein Zurückbleiben von biologischen Komponenten an Stufen zwischen den Kompartimenten stark minimiert oder sogar gänzlich verhindert werden kann. Zugleich kann durch die Wahl der einzubringenden Membran, beispielsweise durch die Wahl ihrer Porengröße, die maximale Größer der durchzulassenden Partikel bestimmt werden.

Unter Verwendung des hier beschriebenen Spritzengehäuses kann das verwendete, im Extraktionsvolumen vorliegende Trennmedium vom Endprodukt abgesondert werden. Es kann somit in einem Arbeitsschritt eine Isolierung z.B. von Zellen durchgeführt werden. Das Spritzengehäuse kann voll automatisiert in der beschriebenen Pipettiervorrichtung verwendet werden.

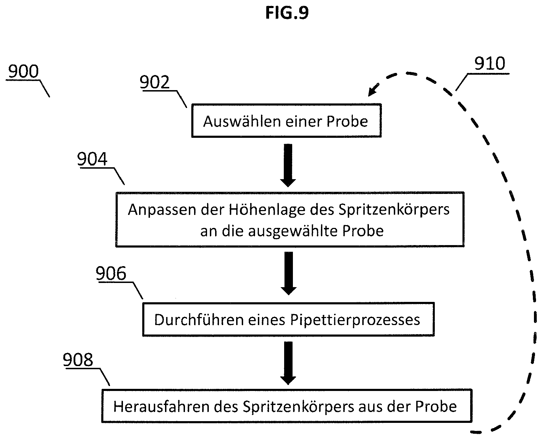

In **Figur 9** ist ein Flussdiagramm 900 dargestellt, welches eine beispielhafte Teilsequenz innerhalb eines Pipettiervorgangs eines biologischen Materials veranschaulicht. Die Teilsequenz kann als eine Art Grundvorgang verstanden werden, welche bei der Ausführung eines Pipettiervorgangs mittels der Pipettiervorrichtung gemäß verschiedenen Ausführungsbeispielen mehrfach an verschiedenen Proben 802 ausgeführt werden kann.

Die in Figur 9 veranschaulichte Grundsequenz kann mit einem Schritt 902 beginnen, in dem eine Probe ausgewählt wird. Bei der auszuwählenden Probe kann es sich um eine Probe 802 handeln, welche auf dem Probenteller 606 der Pipettiervorrichtung 500 gemäß verschiedenen Ausführungsbeispielen angeordnet ist. Dazu kann der Probenteller 606 rotiert werden, so dass die auszuwählende Probe 802 unter der Spritze bzw. unter dem Spritzengehäuse 100 positioniert wird. Die Proben 802 können dabei so auf dem Probenteller 606 angeordnet sein, dass das Spritzengehäuse 100 in jede Probe 802 eingebracht werden kann, welche durch Rotieren des Probentellers 606 unter das erfindungsgemäße Spritzengehäuse 100 gebracht wird. Mit anderen Worten können im Querschnitt von oben oder von unten betrachtet das Spritzengehäuse 100 und die ausgewählte Probe konzentrisch zueinander angeordnet sein, wobei der Querschnitt des entsprechenden Probengefäßes 802 für gewöhnlich größer ist als der Querschnitt des Spritzengehäuses 100. Um eine korrekte Positionierung der Proben 802 zu gewährleisten, kann der Probenteller 606 eine Positionierungsmaske aufweisen, welche auf den Probenteller 606 aufgesteckt werden kann und welche Öffnungen aufweist, in die die Proben 802 eingesetzt werden können. Eine solche Positionierungsmaske kann Öffnungen verschiedener Größen aufweisen, um Proben 802 verschiedener Größen aufzunehmen und in einem Pipettiervorgang zu bearbeiten. Grundsätzlich können die Probenpositionen auf einem Drehteller oder einer entsprechenden Einrichtung vordefiniert sein, d.h. es kann vordefiniert sein, an welcher Probenstelle welcher Probeninhalt (z.B. Blut, Pufferlösung, Biotin usw.) aufzufinden sein soll. Die Startposition des Probentellers kann von der Pipettiervorrichtung automatisch bestimmt werden, so dass beispielsweise eine Aufreinigungs-Programmsequenz immer bei der Startposition des Probentellers anfängt. Grundsätzlich kann ein Aufreinigungsvorgang mittels der Pipettiervorrichtung gemäß verschiedenen Ausführungsbeispielen erfolgen, indem ein dazu geeignetes vorgegebenes Programm auf der Pipettiervorrichtung ausgewählt wird. Bei der Pipettiervorrichtung 500 gemäß verschiedenen Ausführungsbeispielen kann die Startposition einer bestimmten Stelle des Probentellers 508 entsprechen. Dazu kann beispielsweise im Probenteller 508 eine Unterbrechung (Kerbe) in der Mitte zwischen zwei Probeneinsetzstellen angeordnet sein. Die Unterbrechung kann als eine Position 0 (Null) kodiert sein und zur Definition einer Startposition (Nullposition) verwendet werden. Die Startposition kann mittels eines Sensors, beispielsweise eines Hall-Sensors, detektiert werden. Nach dem Einsetzen eines Probentellers 508 in die Pipettiervorrichtung 500 kann diese so eingerichtet sein, dass der Probenteller 508 in die Startposition gefahren wird. Anschließend kann ausgehend von der Startposition ein Aufreinigungsvorgang durchgeführt werden, wobei bei der dazugehörigen Aufreinigungs-Programmsequenz die Bewegung des Probentellers 508 genau bestimmt werden kann (z.B. Reihenfolge verschiedener nacheinander ausgewählter Probeneinsatzpositionen), die und beispielsweise mittels eines Schrittzählers ausgehend von der Startposition die aktuell ausgewählte Position überwacht werden kann.

Nachdem eine Probe 802 in Schritt 902 ausgewählt worden ist, kann in einem darauffolgenden Schritt 904 ein Anpassen der Höhenlage des Spritzenkörpers 100 an die ausgewählte Probe 802 erfolgen. Vor jedem Auswählen einer Probe 802 in Schritt 902 kann zunächst die von der ersten Haltevorrichtung 504 und der zweiten Haltevorrichtung 502 gehaltene Spritze in eine Ausgangsposition gefahren werden welche gewährleistet, dass keine auf dem Probenteller 606 angeordnete Probe 802 mit dem Spritzengehäuse 100 kollidiert. Dieser Schritt kann erforderlich sein, wenn Proben 802 unterschiedlicher Größen (z.B. unterschiedlicher Durchmesser) verwendet werden, welche üblicherweise auch eine unterschiedliche Probenhöhe bedingen können. Bei der Ausgangsposition kann es sich beispielsweise um eine Position handeln, in der die erste Haltevorrichtung 504 maximal weit nach oben gefahren ist, also um eine Position der ersten Haltevorrichtung 504 mit maximalen Aufwärtshub. Sind jedoch die Höhen der Probengefäße 802 auf dem Probenteller 606 bekannt, kann die Ausgangsposition einer Position entsprechen, in welcher die Probe 802 mit der größten Höhe unterhalb des Spritzengehäuses 100 ohne Kollision mit diesem gefahren werden kann. Nach dem Auswählen einer Probe 802 kann das Spritzengehäuse 100 wieder herabgesenkt werden, so dass beispielsweise der untere Rand des Spritzengehäuses 100 in Kontakt mit einem sich in der ausgewählten Probe 802 befindenden Medium kommt. Das Herabsenken der Spritze kann ausgeführt werden, indem die erste Haltevorrichtung 504 und die zweite Haltevorrichtung 502 synchron nach unten bewegt werden. Durch die synchrone Bewegung kann gewährleistet werden, dass keine Relativbewegung zwischen dem Spritzengehäuse 100 und dem Kolben 400 stattfindet, was zur Folge hätte, dass entweder das Medium aus dem Spritzengehäuse 100 verdrängt werden würde oder Luft in das Spritzengehäuse 100 eingezogen werden würde.

Nach dem Absenken des Spritzengehäuses 100 in die ausgewählte, unter das Spritzengehäuse 100 gefahrene Probe 802, kann nach Bedarf eine Relativbewegung zwischen der ersten Haltevorrichtung 504 und der zweiten Haltevorrichtung 502 erfolgen, wobei dazu nur die zweite Haltevorrichtung 502 bewegt wird, welche eine Bewegung des Kolbens innerhalb des erfindungsgemäßen Spritzengehäuses 100 induziert. Dieser Vorgang kann den nächsten Schritt 906 einleiten, in welchem ein Pipettierprozess stattfindet. Je nachdem, ob die zweite Haltevorrichtung 502 nach oben oder nach unten bewegt wird, kann ein wässriges Medium aus der ausgewählten Probe 802 in das Spritzengehäuse 100 oder aus dem Spritzengehäuse 100 in die Probe 802 befördert werden. Selbstverständlich kann dieser Vorgang, je nach Art des durchzuführenden Verfahrens, mehrfach durchgeführt werden, beispielsweise wenn die Extraktionsausbeute durch mehrfaches Durchleiten eines Mediums durch das Extraktionsvolumen erhöht werden soll.

Nach erfolgtem Pipettierprozess kann schließlich in Schritt 908 der Spritzenkörper 100 aus der ausgewählten Probe 802 herausgefahren werden, so dass nachfolgend eine andere auf dem Probenteller 606 angeordnete Probe 802 ausgewählt werden kann und unter das Spritzengehäuse 100 gefahren werden kann. Hierbei kann der Spritzenkörper 100 in die Ausgangslage zurückgefahren werden, so dass beim Drehen des Probentellers 802 keine der Proben 802 mit dem Spritzengehäuse kollidieren kann.

Der gestrichelte Pfeil 910 deutet an, dass sich an das Herausfahren des Spritzenkörpers 100 aus der ausgewählten Probe der Schritt 902 in Bezug auf eine andere ausgewählte Probe 802 anschließen kann. Durch Kombination unterschiedlicher Proben 802 mit unterschiedlichen Pipettierprozessen können so komplexe Pipettiervorgänge am biologischen Material voll automatisiert durchgeführt werden.

In der vorliegenden Beschreibung ist der Aufbau der Pipettiervorrichtung anhand von beispielhaften Ausführungsbeispielen erläutert worden, wobei die Funktionsbeschreibung auf Basis des Spritzengehäuses mit den zwei Membranen erfolgt ist. Die Pipettiervorrichtung kann jedoch auch mit einer Spritze verwendet werden, welcher auf dem erfindungsgemäßen Spritzengehäuse aufbaut, jedoch nicht die beidem Membranen aufweist. Anders ausgedrückt kann das in dieser Beschreibung vorgestellte Spritzengehäuse in der Pipettiervorrichtung gemäß verschiedenen Ausführungsbeispielen verwendet werden, beispielsweise als Extraktionssäulengehäuse. Die Funktion der Pipettiervorrichtung als solche wäre jedoch nicht beeinträchtigt, wenn Spritzen zur Verwendung kommen würden, welche die beiden Membranen nicht aufweisen. Anders ausgedrückt mögen zwar die beiden in der erfindungsgemäßen Spritzengehäuse vorgesehen Membranen vorteilhaft sein oder sogar essentiell sein zur Ausbildung einer Extraktionssäule, sie sind jedoch nicht für die Funktionalität der Pipettiervorrichtung maßgeblich. Die Pipettiervorrichtung kann vielmehr mit jeglichen Spritzen verwendet werden, welche eine passende Form aufweisen und mit einem Kolben betrieben werden können.

## Patentansprüche

1. Spritzengehäuse (100) zum Pipettieren eines biologischen Materials, aufweisend:
einen Spritzenkörper (102), welcher ein erstes offenes Ende (110) und ein zweites offenes Ende (208) aufweist, wobei zwischen diesen ein erster Kanal (206) ausgebildet ist;
eine erste Membran (106), welche sich senkrecht zur Längsrichtung des ersten Kanals (206) über dessen Querschnitt erstreckend angeordnet ist;
einen Spritzenkörperaufsatz (104), welcher ein erstes offenes Ende (308) und ein zweites offenes Ende aufweist (112), wobei zwischen diesen ein zweiter Kanal (306) ausgebildet ist;
eine zweite Membran (108), welche sich senkrecht zur Längsrichtung des zweiten Kanals (306) über dessen Querschnitt erstreckend angeordnet ist;
wobei das zweite offene Ende (208) des Spritzenkörpers (102) und das erste offene Ende (308) des Spritzenkörperaufsatzes (104) derart ausgebildet sind, dass sie formschlüssig zusammensteckbar sind und so das Spritzengehäuse (100) ausbilden,
wobei der erste Kanal (206) und der zweite Kanal (306) im zusammengesteckten Zustand des Spritzengehäuses (100) einen durchgehenden Kanal ausbilden; und
wobei die erste Membran (106) und die zweite Membran (108) im Bereich des durchgehenden Kanals ein Extraktionsvolumen definieren;
wobei das Extraktionsvolumen einen durchgehend gleichbleibenden Durchmesser aufweist und dieser Durchmesser dem Durchmesser des durchgehenden Kanals entspricht.

2. Spritzengehäuse gemäß Anspruch 1,
wobei die erste Membran (106) integral mit der Innenwand des Spritzenkörpers (102) ausgebildet ist.

3. Spritzengehäuse gemäß Anspruch 1 oder 2,
wobei der Durchmesser des ersten Kanals (206) im Bereich oberhalb der ersten Membran (106) dem Durchmesser des ersten Kanals (206) im Bereich unterhalb der ersten Membran (106) entspricht.

4. Spritzengehäuse gemäß einem der Ansprüche 1 bis 3,
wobei der Übergang von einem Bereich oberhalb der ersten Membran (106) zu einem Bereich unterhalb der ersten Membran (106) stufenlos ist.

5. Spritzengehäuse gemäß Anspruch 1,
wobei die erste Membran (106) am Ende des ersten Kanals (206) befestigt ist.

6. Spritzengehäuse gemäß einem der Ansprüche 1 bis 5,
wobei die zweite Membran (108) integral mit der Innenwand des Spritzenkörperaufsatzes (104) ausgebildet ist.

7. Spritzengehäuse gemäß einem der Ansprüche 1 bis 6,
wobei der Durchmesser des zweiten Kanals (306) im Bereich oberhalb der zweiten Membran (108) dem Durchmesser des zweiten Kanals (306) im Bereich unterhalb der zweiten Membran (108) entspricht.

8. Spritzengehäuse gemäß einem der Ansprüche 1 bis 7,
wobei der Übergang von einem Bereich oberhalb der ersten Membran (106) zu einem Bereich unterhalb der ersten Membran (106) stufenlos ist.

9. Spritzengehäuse gemäß einem der Ansprüche 1 bis 5,
wobei die erste Membran (106) am zweiten offenen Ende (208) des Spritzenkörpers (102) befestigt ist.

10. Spritzengehäuse gemäß einem der Ansprüche 1 bis 10,
wobei das zweite offene Ende (208) des Spritzenkörpers (102) und das erste offene Ende (308) des Spritzenkörperaufsatzes (104) derart ausgebildet sind, dass sie einen Einwegverschluss bilden.

11. Spritzengehäuse gemäß Anspruch 10,
wobei es sich bei dem Einwegverschluss um einen Steckverschluss, vorzugsweise um einen Drehverschluss, handelt.

12. Spritzengehäuse gemäß einem der Ansprüche 10 bis 11,
wobei der Einwegverschluss Arretierungsstrukturen aufweist, welche eingerichtet sind im zusammengesetzten Zustand des Spritzengehäuses (100) ein Loslösen des Spritzenkörpers (102) vom Spritzenkörperaufsatz (104) zu verhindern.

13. Spritzengehäuse gemäß einem der Ansprüche 1 bis 11,
wobei das zweite offene Ende (208) des Spritzenkörpers (102) und das erste offene Ende (308) des Spritzenkörperaufsatzes (104) derart ausgebildet sind, dass eines der offenen Enden einen daraus axial herausragenden Kragen aufweist, welcher im zusammengesetzten Zustand des Spritzengehäuses (100) mit einem nach Innen stufig ausgebildeten Bereich des entsprechend anderen offenen Endes im Eingriff steht.

14. Spritzengehäuse gemäß einem der Ansprüche 1 bis 13,
wobei das Spritzengehäuse (100) ferner einen Kolben (400) aufweist, welcher im Inneren des Spritzengehäuses axial verschiebbar gelagert ist.

15. Spritzengehäuse gemäß Anspruch 14, ferner aufweisend:
einen Kolbenstopper, welcher eingerichtet ist die Eintauchtiefe des Kolbens (400) in das Spritzengehäuse (100) zu begrenzen.

## Claims

1. A syringe housing (100) for pipetting a biological material, comprising:
a syringe body (102) having a first open end (110) and a second open end (208) with a first channel (206) formed therebetween;
a first membrane (106) disposed perpendicularly to the longitudinal direction of the first channel (206) and extending across the cross-section thereof;
a syringe body attachment (104) having a first open end (308) and a second open end (112), a second channel (306) being formed therebetween;
a second membrane (108) disposed perpendicularly to the longitudinal direction of the second channel (306) and extending across the cross-section thereof;
wherein the second open end (208) of the syringe body (102) and the first open end (308) of the syringe body attachment (104) are adapted to be interlocked to form the syringe housing (100), wherein the first channel (206) and the second channel (306) form a continuous channel in the interlocked state of the syringe housing (100); and
wherein the first membrane (106) and the second membrane (108) define an extraction volume in the region of the continuous channel;
the extraction volume having a continuously constant diameter and said diameter corresponding to the diameter of the continuous channel.

2. Syringe housing as defined in claim 1,
wherein the first Membrane (106) is integrally formed with the inner wall of the syringe body (102).

3. Syringe housing according to claim 1 or 2,
wherein the diameter of the first channel (206) in the region above the first membrane (106) corresponds to the diameter of the first channel (206) in the region below the first membrane (106).

4. Syringe housing according to any of claims 1 to 3,
wherein the transition from a region above the first membrane (106) to a region below the first membrane (106) is stepless.

5. Syringe housing according to claim 1,
wherein the first membrane (106) is attached to the end of the first channel (206).

6. Syringe housing according to any of claims 1 to 5,
wherein the second membrane (108) is formed integrally with the inner wall of the syringe body attachment (104).

7. Syringe housing according to one of claims 1 to 6,
wherein the diameter of the second channel (306) in the region above the second membrane (108) corresponds to the diameter of the second channel (306) in the region below the second membrane (108).

8. Syringe housing according to any of claims 1 to 7,
wherein the transition from a region above the first membrane (106) to a region below the first membrane (106) is stepless.

9. Syringe housing according to any of claims 1 to 5,
wherein the first membrane (106) is attached to the second open end (208) of the syringe body (102).

10. Syringe housing according to any of claims 1 to 10,
wherein the second open end (208) of the syringe body (102) and the first open end (308) of the syringe body attachment (104) are configured to form a one-way lock.

11. Syringe housing according to claim 10,
wherein the one-way closure is a press lock, preferably a twist lock.

12. Syringe housing according to any one of claims 10 and 11,
wherein the one-way lock has locking structures adapted to prevent detachment of the syringe body (102) from the syringe body attachment (104) in the assembled state of the syringe housing (100).

13. Syringe housing according to any of claims 1 to 11,
wherein the second open end (208) of the syringe body (102) and the first open end (308) of the syringe body attachment (104) are formed such that one of the open ends has an axially protruding collar extending therefrom which, in the assembled state of the syringe housing (100), engages an inwardly stepped portion of the corresponding other open end.

14. Syringe housing according to any of claims 1 to 13,
wherein the syringe housing (100) further comprises a plunger (400) which is supported within the syringe housing in an axially slidable manner.

15. Syringe housing according to claim 14, further comprising:
a plunger stopper adapted to limit the plunging depth of the plunger (400) into the syringe housing (100).

## Revendications

1. Boîtier de seringue (100) pour le pipetage d'une matière biologique comportant:
un corps de seringue (102) comportant une première extrémité ouverte (110) et une deuxième extrémité ouverte (208), un premier canal (206) étant formé entre celles-ci;
une première membrane (106) agencée perpendiculairement à la direction longitudinale du premier canal (206) s'étendant sur sa section transversale;
un capuchon de corps de seringue (104) comportant une première extrémité ouverte (308) et une deuxième extrémité ouverte (112), un deuxième canal (306) étant agencé entre celles-ci;
une deuxième membrane (108) agencée perpendiculairement à la direction longitudinale du deuxième canal (306) s'étendant sur sa section transversale;
la deuxième extrémité ouverte (208) du corps de seringue (102) et la première extrémité ouverte (308) du capuchon de corps de seringue (104) étant formé de sorte qu'elles sont emboîtables à engagement positif ainsi formant le boîtier de seringue (100), le premier canal (206) et le deuxième canal (306) en état emboîté du boîtier de seringue (100) formant un canal continu; et
la première membrane (106) et la deuxième membrane (108) au niveau du canal continu définissant un volume d'extraction;
le volume d'extraction comportant un diamètre constant sur tout le volume et ce diamètre correspondant au diamètre du canal continu.

2. Boîtier de seringue selon la revendication 1,
la première membrane (106) étant formée intégralement avec la paroi interne du corps de seringue (102).

3. Boîtier de seringue selon la revendication 1 ou 2,
le diamètre du premier canal (206) au niveau au-dessus de la première membrane (106) correspondant au diamètre du premier canal (206) au niveau au-dessous de la première membrane (106).

4. Boîtier de seringue selon l'une quelconque des revendications 1 à 3,
le passage d'un niveau au-dessus de la première membrane (106) à un niveau au-dessous de la première membrane (106) étant un passage continu.

5. Boîtier de seringue selon la revendication 1,
la première membrane (106) étant fixé à l'extrémité du premier canal (206).

6. Boîtier de seringue selon l'une quelconque des revendications 1 à 5,
la deuxième membrane (108) étant formée intégralement avec la paroi interne du capuchon de corps de seringue (104).

7. Boîtier de seringue selon l'une quelconque des revendications 1 à 6,
le diamètre du deuxième canal (306) au niveau au-dessus de la deuxième membrane (108) correspondant au diamètre du deuxième canal (306) au niveau au-dessous de la deuxième membrane (108).

8. Boîtier de seringue selon l'une quelconque des revendications 1 à 7,
le passage d'un niveau au-dessus de la première membrane (106) à un niveau au-dessous de la première membrane (106) étant un passage continu.

9. Boîtier de seringue selon l'une quelconque des revendications 1 à 5,
la première membrane (106) étant fixée à la deuxième extrémité ouverte (208) du corps de seringue (102).

10. Boîtier de seringue selon l'une quelconque des revendications 1 à 10,
la deuxième extrémité ouverte (208) du corps de seringue (102) et la première extrémité ouverte (308) du capuchon de corps de seringue (104) étant formée de sorte qu'elles forment une fermeture à usage unique.

11. Boîtier de seringue selon la revendication 10,
la fermeture à usage unique étant une fermeture enfichable, de préférence une fermeture rotative.

12. Boîtier de seringue selon l'une quelconque des revendications 10 à 11,
la fermeture à usage unique comportant des structures d'arrêt configurés pour éviter le corps de seringue (102) de se détacher du capuchon de corps de seringue (104) lorsque le boîtier de seringue (100) est assemblé.

13. Boîtier de seringue selon l'une quelconque des revendications 1 à 11,
la deuxième extrémité ouverte (208) du corps de seringue (102) et la première extrémité ouverte (308) du capuchon de corps de seringue (104) étant configurée de telle sorte qu'une des extrémités ouvertes comporte une collerette faisant saillie axialement de celle-ci, qui, en état assemblé du boîtier de seringue (100), est engagée avec une région réalisée en gradins vers l'intérieur de l'autre extrémité ouverte correspondante.

14. Boîtier de seringue selon l'une quelconque des revendications 1 à 13,
le boîtier de seringue (100) comportant en outre un piston (400) qui est logé de manière déplaçable axialement à l'intérieur du boîtier de seringue.

15. Boîtier de seringue selon la revendication 14, comportant en outre:
un bloqueur de piston configuré pour limiter la profondeur d'immersion du piston (400) dans le boîtier de seringue (100).
